# EUROPÄISCHE PATENTSCHRIFT

(11) **EP 3 171 138 B1**
(45) Veröffentlichungstag und Bekanntmachung des Hinweises auf die Patenterteilung: **19.08.2020**
(21) Anmeldenummer: 16197154.4
(22) Anmeldetag: 03.11.2016
(51) Int. Cl.: G01F 23/284, G01S 7/03, G01S 7/35, G01S 13/42, G01S 13/88, G01S 13/89, G01F 22/00, G01S 13/34, G01S 13/87, H01Q 1/22, H01Q 19/17, H01Q 21/06, H01Q 3/24, H01Q 3/26

(54) **ANTENNENVORRICHTUNG UND VERFAHREN ZUM SENDEN UND/ODER EMPFANGEN EINES SIGNALS**
ANTENNA DEVICE AND METHOD FOR TRANSMITTING AND/OR RECEIVING A SIGNAL
DISPOSITIF D'ANTENNE ET PROCÉDÉ D'ENVOI ET/OU DE RÉCEPTION D'UN SIGNAL

(30) Priorität: 17.11.2015 WO PCT/EP2015/076854
(43) Veröffentlichungstag der Anmeldung: 24.05.2017
(73) Patentinhaber: VEGA Grieshaber KG, 77709 Wolfach (DE)
(72) Erfinder: Wälde, Steffen, 78078 Niedereschach (DE); Welle, Roland, 77756 Hausach (DE)
(74) Vertreter: Maiwald Patent- und Rechtsanwaltsgesellschaft mbH

(56) Entgegenhaltungen:
- EP-A1- 2 189 765
- EP-A2- 1 701 142
- WO-A1-2010/144936
- US-A1- 2014 208 845
- US-A1- 2014 253 147

## Beschreibung

### Gebiet der Erfindung

Die vorliegende Erfindung betrifft das technische Gebiet der Messtechnik.

### Hintergrund der Erfindung

Zur Bestimmung des Füllstands eines Füllguts oder Schüttguts in einem Behälter können topologieerfassende Füllstandmessgeräte verwendet werden. Diese Messgeräte tasten die Füllgut- und/oder Schüttgutoberfläche mit einem elektronischen Signal ab und können die aus der Abtasttung abgeleitete Kenntnis der dreidimensionalen Oberflächentopologie des Füllguts und/oder des Schüttguts weiter ausnutzen, um unter Annahme einer bekannten Fläche unterhalb des Füllguts das Volumen des Füllguts und/oder bei bekannter Dichte die Masse oder weitere daraus abzuleitende Größen zu ermitteln. Zur Abtastung wird ein Strahl einer elektromagnetischen Welle über das Füllgut oder das Schüttgut geführt und das Reflexionsverhalten unter unterschiedlichen Winkeln betrachtet und ausgewertet.

Eine dreidimensionale (3D) Füllstandmessung oder eine Topologiemessung mit elektromagnetischen Wellen, insbesondere mit Radarsignalen, mag neue Anwendungszielsetzungen bei der Vermessung von Materialen erschließen.

Die Patentschrift DE 10 2007 039 897 B3 beschreibt ein Verfahren zum Betrieb einer Antennengruppe mit mehreren Sendern und mehreren Empfängern sowie eine zugehörige Vorrichtung. Die Druckschrift WO 2015/052699 A1 betrifft ein Verfahren zum Auswerten eines Inhalts eines Behälters mithilfe einer Vielzahl von akustischen Sende-/EmpfangsArrays. Die Druckschrift WO 2015/120885 A1 betrifft eine Messvorrichtung und ein Verfahren zum Erfassen von Eigenschaften eines Objektes.

US 2014/0253147 A1 beschreibt ein Füllstandradargerät mit einer PLL-Schaltung zur Erzeugung eines Ausgabesignals.

EP 2 189765 A1 beschreibt ein Hochfrequenzmodul zur Füllstandmessung im W-Band und einen Vervielfacher mit getakteter Spannungsversorgung.

US 2014/0208845 A1 beschreibt ein Füllstandmessgerät mit einem Antennenarray.

EP 1 701 142 A2 beschreibt ein Füllstandmessgerät zur Messung des Füllstands eines in einem Behälter vorgesehenen Mediums auf der Grundlage des Radar-Prinzips.

WO 2010/144936 A1 beschreibt ein Verfahren und eine Vorrichtung zur Berechnung einer Oberfläche eines Füllguts eines Behälters mit einer Antenneneinrichtung, die mehrere Antennen zum Senden und Empfangen von elektromagnetischen Signalen aufweist.

### Zusammenfassung der Erfindung

Gemäß einem Aspekt der vorliegenden Erfindung wird eine Antennenvorrichtung, ein Füllstandmessgerät mit einer Antennenvorrichtung, ein Verfahren zum Senden und/oder Empfangen eines Signals, ein Programmelement zum Senden und/oder Empfangen eines Signals und ein computerlesbares Speichermedium zum Senden und/oder Empfangen eines Signals angegeben.

Es ist erwünscht, eine effektive Antennenvorrichtung zum Messen von Füllständen zu schaffen.

Der Gegenstand der Erfindung wird von den unabhängigen Patentansprüchen festgelegt. Weitere Ausführungsbeispiele der Erfindung ergeben sich aus den Unteransprüchen und der folgenden Beschreibung.

Gemäß einem Aspekt der vorliegenden Erfindung wird eine Antennenvorrichtung beschrieben, welche eine Signalquelle zum Erzeugen eines Sendesignals mit einer Grundfrequenz, eine Steuereinrichtung und einen ersten Sendekanal aufweist. Der Sendekanal weist wiederum eine erste Frequenzumsetzeinrichtung und eine erste Sendeeinrichtung auf, welche einen ersten Frequenzdurchlassbereich aufweist. Die Signalquelle ist mit der ersten Frequenzumsetzeinrichtung verbunden und die Steuereinrichtung ist mit der ersten Frequenzumsetzeinrichtung verbunden. Die Steuereinrichtung ist mit der ersten Frequenzumsetzeinrichtung so verbunden, dass sie ein zeitgesteuertes Umsetzen der Grundfrequenz des Sendesignals auf eine erste Sendefrequenz durchführen kann, die in einem ersten Frequenzdurchlassbereich der ersten Sendeeinrichtung liegt, um über den ersten Sendekanal ein erstes Sendesignal mit der ersten Sendefrequenz bereitzustellen. Das Umsetzen der Grundfrequenz des ersten Sendesignals auf die erste Sendefrequenz, die in dem ersten Frequenzdurchlassbereich liegt, erfolgt nach einem vorgebbaren ersten Zeitschema.

In anderen Worten steuert die Steuereinrichtung zeitgesteuert das Umsetzen der Grundfrequenz des Sendesignals auf die erste Sendefrequenz. Dabei erfolgt die Umsetzung der Frequenz so, dass zu Zeitpunkten, in denen die Antennenvorrichtung aktiv sein soll, also beispielsweise senden und/oder empfangen soll, die Frequenzumsetzeinrichtung aktiviert wird, um das Sendesignal in einen Frequenzbereich zu transformieren, der auf die Sendeeinrichtung angepasst ist. Insbesondere transformiert die Frequenzumsetzeinrichtung das Sendesignal so in einen Durchlassbereich der Sendeeinrichtung, dass das Sendesignal von der Sendeeinrichtung versendet wird. Somit wird erfindungsgemäß durch das An- und Abschalten oder das Aktivieren und Deaktivieren der Frequenzumsetzeinrichtung darüber entschieden, ob das Sendesignal gesendet wird oder nicht. Das An- und Abschalten erfolgt mit einer niedrigen Frequenz, so dass Niederfrequenzschalter eingesetzt werden können, beispielsweise Relais oder elektronische Schalter. Aufwendige Hochfrequenzbauelemente können somit vermieden werden.

Bei der Antennenvorrichtunghandelt es sich erfindungsgemäß insbesondere um eine Antennenvorrichtung für ein sog. MIMO (Multiple Input-Multiple Output) Füllstandsradargerät, das nach dem FMCW (Frequency Modulated Continuous Wave) Prinzip arbeitet. Pro Sendezyklus und Sendezweig kann ein Sendesignal ausgesendet werden, welches eine Frequenzrampe aufweist. Die typische Zeit für einen Sendezyklus beträgt beispielsweise 5 Millisekunden.

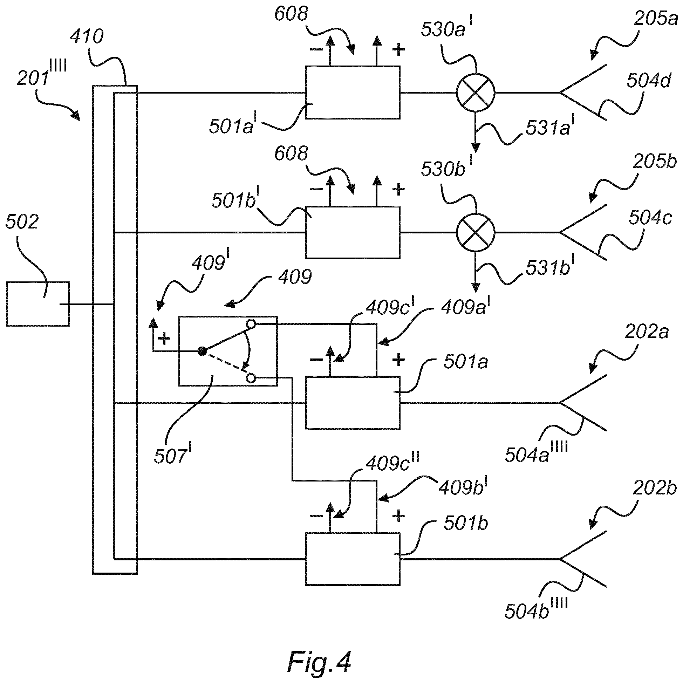

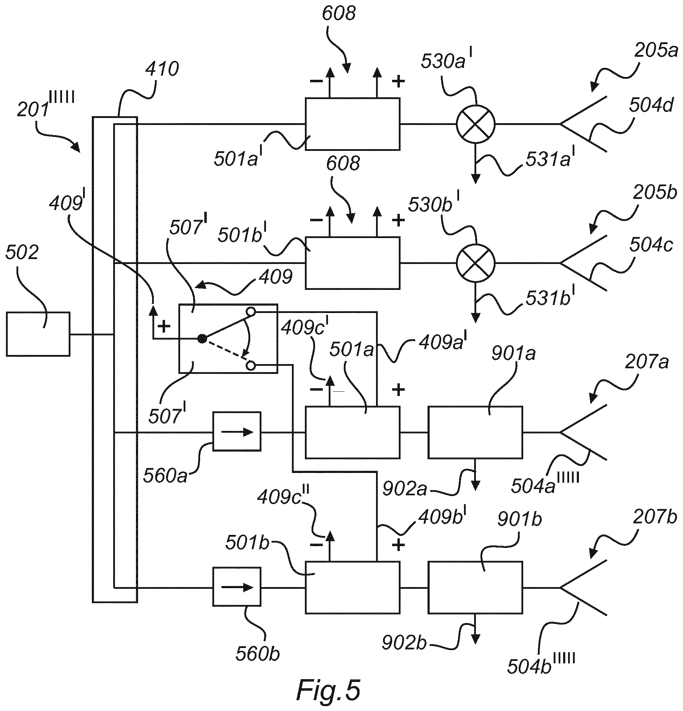

Es kann eine einzige Signalquelle vorgesehen sein, welche einen spannungsgesteuerten Oszillator (VCO) und eine Phasenregelschleife (PLL) aufweist. Erfindungsgemäß sind mehrere Sendekanäle (oder kombinierte Sende-/Empfangskanäle) und mehrere Empfangskanäle vorgesehen. Jeder Sende- (bzw. Sende-/Empfangskanal) und Empfangskanal weist eine eigene Frequenzumsetzeinrichtung, beispielsweise einen Frequenzvervielfacher, auf. Für das zeitgesteuerte Umsetzen der Grundfrequenz des Sendesignals auf die erste Sendefrequenz ist für jede Frequenzumsetzeinrichtung eine Schalteinheit vorgesehen, um die Frequenzumsetzeinrichtung entsprechend dem vorgebbaren Zeitschema an- bzw. abzuschalten. Die verschiedenen Schalteinheiten können auch miteinander kombiniert werden, wie dies in den Figuren 4 und 5 gezeigt ist, in welchen eine Schalteinheit zwischen zwei Frequenzumsetzeinrichtungen hin- und herschaltet.

Das Anschalten einer Frequenzumsetzeinrichtung führt dazu, dass die Frequenz im entsprechenden Sendekanal vervielfacht wird. Ist die entsprechende Frequenzumsetzeinrichtung hingegen abgeschaltet, tritt idealerweise am Ausgang der Frequenzumsetzeinrichtung kein frequenzvervielfachtes Sendesignal auf, was bedeutet, dass kein Sendesignal über die Antenne abgestrahlt wird.

Bei der Schaltung der Antennenvorrichtung handelt es sich also nicht um eine Energiesparschaltung, welche ausgewählte Sendekanäle zeitgesteuert deaktivieren kann, sondern um eine Schaltung zur Erzeugung eines sog. Co-Arrays.

Die verschiedenen Co-Arrays werden erzeugt, indem die unterschiedlichen Sendekanäle nach dem vorgegebenen Zeitschema (genauer: die entsprechenden Frequenzumsetzeinrichtungen) an- bzw. abgeschaltet werden. Die vorliegende Erfindung dient also der Erzeugung eines Co-Arrays nach dem Zeitmultiplexverfahren.

Soll ein bestimmter Sendekanal für eine Messung verwendet werden, so beträgt die Zeit, während der die Frequenzumsetzeinrichtung angeschaltet ist, typischerweise 5 Millisekunden, also die Zeit für einen Messzyklus.

Ein oben beschriebenes (virtuelles) Co-Array ergibt sich durch eine diskrete Faltung der Positionen der Sende- und Empfangskanäle (genauer: der Positionen der auf der Antenne angeordneten Sende- bzw. Empfangselemente, die in Form von flächigen Antennenpatches ausgeführt sein können). Das (virtuelle) Co-Array weist hierbei eine Apertur auf, die ein (physikalischer) Empfangsarray haben würde, wenn sich nur ein Sender in der Mitte des Empfangsarrays befinden würde. Die Apertur des Co-Arrays ist im Vergleich zur tatsächlichen Apertur des Sende- und Empfangsarrays größer und/oder dichter besetzt.

Erfindungsgemäß wird durch die Auswertung der Signale der einzelnen Empfangskanäle, die Signale immer dann empfangen wenn mindestens ein Sender angeschaltet ist, ein Oberflächenprofil eines Schüttguts errechnet. Dazu fließen unter anderem die Informationen in den Berechnungsalgorithmus mit ein, zu welchem Zeitpunkt und an welcher räumlichen Position des tatsächlichen (physikalisch vorhandenen) Arrays ein Sender ein Sendesignal gesendet hat. Gemäß einem anderen Aspekt der vorliegenden Erfindung wird ein Füllstandmessgerät zum Bestimmen eines Füllstands und/oder zum Bestimmen einer Oberflächenstruktur eines Objekts mit einer oben und im Folgenden beschriebenen Antennenvorrichtung bereitgestellt. Gemäß einem anderen Aspekt der vorliegenden Erfindung wird ein Verfahren zum Senden und/oder Empfangen eines Signals beschrieben.

Erfindungsgemäß ist das erste Zeitschema ein Bestandteil eines Zeitmultiplexverfahrens. Gemäß eines weiteren Aspekts der vorliegenden Erfindung wird ein Programmelement und ein computerlesbares Speichermedium angegeben, die Programmcode enthalten, der zum Ausführen des erfindungsgemäßen Verfahrens dient, wenn er von einem Prozessor ausgeführt wird.

Erfindungsgemäß wird ein MIMO (Multiple Input Multiple Output) Radargerät oder eine MIMO Antennenanordnung zur Bestimmung eines Füllstandes und einer Topologie bereitgestellt, bei dem ein frequenzvervielfachendes Hochfrequenzbauelement als Frequenzumsetzeinrichtung dient. Durch gezieltes An- und Abschalten der Versorgungsspannung agiert dieses frequenzvervielfachende Hochfrequenzbauelement oder die Frequenzumsetzeinrichtung als Hochfrequenzschalter. Das Hochfrequenzbauelement mag ein Teil eines Sendekanals sein, welcher auch als Empfänger agieren kann, wobei durch das zeitgesteuerte Umschalten von einer Vielzahl von Sendekanälen und/oder Empfangskanälen, die in einem Array oder in einer Antennengruppe angeordnet sind, ein Co-Array erzeugt werden kann. Dieses Co-Array oder virtuelle Array kann einem physikalischen Array entsprechen, welches eine Anzahl von Antennenelementen aufweist, welche der Multiplikation der Anzahl der Sendeeinrichtungen mit der Anzahl der Empfangseinrichtungen entspricht. Eine Sendeeinrichtung, die auch empfangen kann, wird als Sende-/Empfangseinrichtung bezeichnet.

In einem Beispiel mag eine Auswerteeinrichtung oder eine Auswerteeinheit genutzt werden, welche die Signale verarbeitet, welche von den Antennenelementen, insbesondere von den Empfangseinrichtungen, erfasst werden. Diese Auswerteeinheit mag aus den verarbeiteten Signalen die Topologie der Füllgutoberfläche und/oder zumindest einen daraus abgeleiteten Wert bestimmen und diesen Wert an einer Schnittstelle bereitstellen. Bei der Schnittstelle kann es sich auch um eine Zweileiterverbindung handeln, die neben der Bereitstellung der Topologie oder des daraus abgeleiteten Wertes auch der Energieversorgung dienen mag.

Ein Verfahren, welches in einer Auswerteeinrichtung abläuft, kann genutzt werden, um die mittels der Empfangskanäle empfangenen Signale so aufzubereiten, dass mit ihnen eine Füllstandberechnung möglich ist. Dabei mag die Auswerteeinrichtung Verfahren der digitalen Strahlformung (Digital Beam Forming, DBF) nutzen und/oder Verfahren zur Bildung eines virtuellen Co-Arrays, beispielsweise durch eine diskrete Faltung.

Gemäß einem weiteren Aspekt der Erfindung weist die Antennenvorrichtung weiter zumindest einen zweiten Sendekanal auf. Dieser zweite Sendekanal ist im Wesentlichen gleich wie der erste Sendekanal aufgebaut und weist eine zweite Frequenzumsetzeinrichtung und eine zweite Sendeeinrichtung auf. Wenn die Sendekanäle an unterschiedlichen Positionen oder Orten angeordnet sind, werden im Wesentlichen gleichartige Signale generiert, die von unterschiedlichen Positionen stammen.

Gemäß einem anderen Aspekt der vorliegenden Erfindung weist zumindest ein Sendekanal ausgewählt aus der Gruppe von Kanälen, die aus dem ersten Sendekanal und dem zumindest einen zweiten Sendekanal besteht, eine Sende-/Empfangsmischeinrichtung auf. Die Sende-/Empfangsmischeinrichtung ist mit der ersten Frequenzumsetzeinrichtung des ersten Sendekanals und/oder mit einer der zweiten Frequenzumsetzeinrichtungen des jeweiligen zumindest einen zweiten Sendekanals verbunden. Das Empfangssignal hat dieselbe Frequenz wie das Sendesignal. Wird jedoch ein FMCW Radarverfahren genutzt wird ein Signal mit variabler Frequenz in Form einer Frequenzrampe geschickt oder ein Chirpsignal. In diesem Fall weisen das Sendesignal und das Empfangssignal die gleiche Frequenzrampe auf.

Ferner ist die Sende-/Empfangsmischeinrichtung so eingerichtet, dass das erste Empfangssignal und/oder das zumindest eine zweite Empfangssignal als ein erstes Sende-/Empfangszwischenfrequenzsignal und/oder als zumindest ein zweites Sende-/Empfangszwischenfrequenzsignal bereitgestellt werden kann.

Ist ein Empfangskanal und/oder Sendekanal ausschließlich für das Senden bzw. das Empfangen zuständig, können die Kanäle als reine Kanäle bezeichnet werden.

Gemäß einem anderen Aspekt der vorliegenden Erfindung ist zumindest eine von der ersten Frequenzumsetzeinrichtung und der jeweiligen zweiten Frequenzumsetzeinrichtung mit einer schaltbaren Energieversorgung verbunden, um das zeitgesteuerte Umsetzen der Grundfrequenz des Sendesignals auf die erste Sendefrequenz und/oder das zeitgesteuerte Umsetzen der Grundfrequenz des Sendesignals auf die zweite Sendefrequenz zu ermöglichen. In anderen Worten mag in den Sendekanälen, Empfangskanälen und/oder Sende-/Empfangskanälen vorgesehen sein, ein aktives frequenzumsetzendes Hochfrequenzbauelement als Frequenzumsetzeinrichtung und/oder als Empfangsfrequenzumsetzeinrichtung zu nutzen. Da es sich bei dem frequenzumsetzenden Bauelement um ein aktives Bauelement handelt, mag es mit einer Energieversorgung verbunden sein. Um ein Ab- und Anschalten des Sendesignals und/oder des Empfangssignals vorzusehen, mag ein Schalten der Energieversorgung benutzt werden. Eine Energieversorgung kann eine Spannungsquelle und/oder eine Stromquelle sein.

Gemäß einem anderen Aspekt der vorliegenden Erfindung weist die Antennenvorrichtung eine Auswerteeinrichtung auf. Die Auswerteeinrichtung ist eingerichtet, das vorgebbare Gesamtzeitschema und/oder zumindest zwei Zwischenfrequenzempfangssignale ausgewählt aus der Gruppe der Zwischenfrequenzempfangssignale bestehend aus dem ersten Sende-/Empfangszwischenfrequenzsignal, dem zumindest einen zweiten Sende-/Empfangszwischenfrequenzsignals und dem Empfangszwischenfrequenzsignal zu empfangen. Darüber hinaus ist die Auswerteeinrichtung eingerichtet durch das Anwenden von einer Methode zur digitalen Strahlformung aus dem vorgebbaren Gesamtzeitschema und den zumindest zwei Zwischenfrequenzempfangssignalen eine Empfangsechokurve für eine Raumrichtung zu bestimmen. Bei der Auswertung mag außerdem das individuelle Schaltverhalten eines entsprechenden Kanals berücksichtigt werden.

Die Auswerteeinrichtung mag eine Information über die Reihenfolge der einzelnen Zeitschemata des Gesamtzeitschemas haben und diese Information nutzen, um Empfangssignale aus den verschiedenen Empfangs- und/oder Sende-/Empfangskanälen korrekt auszuwerten, um zu einer Information über die Beschaffenheit der Oberfläche eines Objekts oder einer Topologie zu kommen. Aus dieser Beschaffenheit der Oberfläche eines Objekts kann die Auswerteeinrichtung zu einem Messergebnis, wie beispielsweise einem Wert für einen Füllstand kommen.

Gemäß einem noch anderen Aspekt der vorliegenden Erfindung mag die Methode zur digitalen Strahlformung, welche von der Auswerteeinrichtung angewendet wird, das Bilden eines virtuellen Co-Arrays oder eines virtuellen Arrays aufweisen.

Gemäß einem anderen Aspekt der vorliegenden Erfindung weist die Antennenvorrichtung zumindest zwei Sendekanäle und mehrere Empfangskanäle auf, wobei die einzelnen Kanäle im Wesentlichen linienförmig und/oder rasterförmig mit einem gleichmäßigen Abstand untereinander angeordnet sind, um eine Antennenvorrichtung, eine Antennengruppe, ein physikalisches Array oder ein Antennenarray zu formen.

Gemäß einem anderen Aspekt der vorliegenden Erfindung sind die erste Sendefrequenz, die zweite Sendefrequenz und/oder die Empfangsfrequenz im Wesentlichen gleich. Gemäß einem anderen Aspekt der vorliegenden Erfindung ist zwischen der Signalquelle und zumindest einer der ersten Frequenzumsetzeinrichtung, der zweiten Frequenzumsetzeinrichtung und/oder der Empfangsfrequenzumsetzeinrichtung ein Isolator angeordnet. Gemäß einem anderen Beispiel mag das Sendeelement, das Empfangselement und/oder das Sende-/Empfangselement an einer Dreheinrichtung zur Bestimmung einer Raumorientierung angeordnet sein. Insbesondere mag die Antennenvorrichtung eine Dreheinrichtung aufweisen.

Gemäß einem Aspekt der vorliegenden Erfindung weist die Antennenvorrichtung eine Verarbeitungseinrichtung auf. Die Verarbeitungseinrichtung kann ein Teil der Auswerteeinrichtung sein und einen Messwert bereitstellen, wie z.B. einen Füllstand. Gemäß einem anderen Aspekt der vorliegenden Erfindung ist die Antennenvorrichtung als Zweileitergerät ausgebildet, wobei eine Energieversorgungsleitung auch zur Datenübertragung genutzt wird. Ein Zweileitergerät weist eine Zweileiterverbindung oder Zweidrahtverbindung auf, wobei die Zweileiterverbindung genau zwei elektrische Leitungen aufweist.

Gemäß einem anderen Aspekt der vorliegenden Erfindung wird ein Füllstandmessgerät zum Bestimmen eines Füllstandes und/oder zum Bestimmen einer Oberflächenstruktur eines Objekts mit einer Antennenvorrichtung angegeben.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt ein Füllstandmessgerät mit einer Antennenvorrichtung gemäß einem exemplarischen Ausführungsbeispiel der vorliegenden Erfindung.
Fig. 2a zeigt eine perspektivische Darstellung einer linearen Parabolantennenvorrichtung gemäß einem exemplarischen Ausführungsbeispiel der vorliegenden Erfindung.
Fig. 2b zeigt eine perspektivische Darstellung eines zweidimensionalen Antennenarrays gemäß einem exemplarischen Ausführungsbeispiel der vorliegenden Erfindung.
Fig. 3a zeigt eine Draufsicht auf eine mit linear angeordneten Sendekanälen und Empfangskanälen gemäß einem exemplarischen Ausführungsbeispiel der vorliegenden Erfindung.
Fig. 3b zeigt ein Blockdiagramm eines Sende-/Empfangskanals gemäß einem exemplarischen Ausführungsbeispiel der vorliegenden Erfindung.
Fig. 3c zeigt ein Blockdiagramm einer Antennenvorrichtung mit einem HF-Wechselschalter für die Sendekanäle gemäß einem exemplarischen Ausführungsbeispiel der vorliegenden Erfindung.
Fig. 3d zeigt ein Blockdiagramm einer Antennenvorrichtung mit einzelnen jedem Sendekanal zugeordneten Hochfrequenzschaltern gemäß einem exemplarischen Ausführungsbeispiel der vorliegenden Erfindung.
Fig. 3e zeigt ein Blockdiagramm einer Antennenvorrichtung mit geschalteten Sendeverstärkern gemäß einem exemplarischen Ausführungsbeispiel der vorliegenden Erfindung.
Fig. 4 zeigt ein Blockdiagramm einer Antennenvorrichtung mit einer zeitgesteuerten Frequenzumsetzeinrichtung gemäß einem exemplarischen Ausführungsbeispiel der vorliegenden Erfindung.
Fig. 5 zeigt ein Blockdiagramm einer Antennenvorrichtung mit Sende-/Empfangskanälen gemäß einem exemplarischen Ausführungsbeispiel der vorliegenden Erfindung.
Fig. 6a zeigt ein Simulationsdiagramm zur Bildung eines virtuellen Co-Arrays gemäß einem exemplarischen Ausführungsbeispiel der vorliegenden Erfindung.
Fig. 6b zeigt ein Simulationsdiagramm zur Bildung eines virtuellen Co-Arrays, wobei Sendekanäle als Sende-/Empfangskanäle genutzt werden, gemäß einem exemplarischen Ausführungsbeispiel der vorliegenden Erfindung.
Fig. 6c zeigt ein Simulationsdiagramm zur Bildung eines virtuellen Co-Arrays unter der Berücksichtigung eines adaptiven Faltungskerns gemäß einem exemplarischen Ausführungsbeispiel der vorliegenden Erfindung.
Fig. 7 zeigt ein Flussdiagramm für ein Verfahren zum Senden und/oder Empfangen eines Signals gemäß einem exemplarischen Ausführungsbeispiel der vorliegenden Erfindung.

### Detaillierte Beschreibung von Ausführungsbeispielen

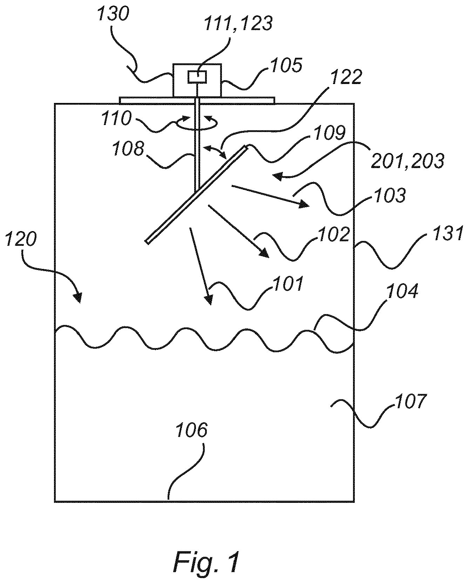

Die Darstellungen in den Figuren sind schematisch und nicht maßstäblich. In der folgenden Beschreibung der Fig. 1 bis Fig. 7 werden die gleichen Bezugsziffern für gleiche oder sich entsprechende Elemente verwendet.

Ohne Einschränkung der allgemeinen Gültigkeit, mag in der folgenden Beschreibung der Figuren im Wesentlichen auf eine Linearantenne 201 eingegangen werden. Die Beschreibung und Prinzipien gelten jedoch auch entsprechend für die zweidimensionale Arrayantenne 203 und entsprechend für die Betriebsverfahren.

Fig. 1 zeigt ein Füllstandmessgerät 105 oder topologieerfassendes Radarmessgerät 105 gemäß einem exemplarischen Ausführungsbeispiel der vorliegenden Erfindung. Das Messgerät 105 oder Feldgerät 105, insbesondere das Füllstandmessgerät 105, ist in der Lage, Echosignale oder Echokurven aus unterschiedlichen Winkelbereichen 101, 102, 103 zu erfassen. Das Füllstandmessgerät 105 weist eine Steuereinrichtung 111 und eine Auswerteeinrichtung 123 auf und wird über die Zweileiterverbindung 130 mit Energie versorgt. Die Auswerteeinrichtung 123 weist eine Verarbeitungseinrichtung zum Bereitstellen eines Messwerts auf. Zu jeder erfassten Echokurve wird die Distanz zum jeweiligen Punkt der Oberfläche des Schüttguts 104 oder Füllguts 104 ermittelt. Durch numerische Integration dieser Distanzwerte und unter Postulierung einer ebenen Oberfläche 106, insbesondere eines ebenen Behälterbodens 106, unter dem Schüttgut 104 oder unter dem Füllgut 104 kann das Volumen der Schütthalde 107 ermittelt werden. Das Füllstandmessgerät 105 weist die Antennenhalterung 108 oder Dreheinrichtung 108 mit der Antennenbasis 109 zur Befestigung einer Antenne 201, 203 oder Antennenvorrichtung 201, 203 auf.

Zusätzlich oder alternativ zu dem mechanischen Drehen 110 und/oder dem Verkippen 122 kann die Hauptstrahlrichtung 101, 102, 103 der Antenne 201, 203 oder Antennenvorrichtung 201, 203 durch Verfahren der digitalen Strahlformung ergänzt oder ersetzt werden. Durch Auswerten der empfangenen Signale kann mit nur einer Messung ein Empfangssignal in den unterschiedlichen Winkelbereichen 101, 102, 103 gebildet werden, um so die Oberfläche 120 des Schüttguts 104 unter den verschiedenen Winkelbereichen zu erfassen. Durch die Erfassung eines Empfangsstrahls unter den verschiedenen Winkelbereichen 101, 102, 103, lässt sich ein Empfangssignal über die Oberfläche 120 des Füllgutes führen. Zur Erfassung der verschiedenen Raumbereiche kommen Verfahren der digitalen Strahlformung (DBF) zum Einsatz und es kann im Wesentlichen ohne eine mechanische Winkelverstellung 122 oder Drehung 110 eine Abtastung der Oberfläche 120 des Schüttguts 104 durchgeführt werden.

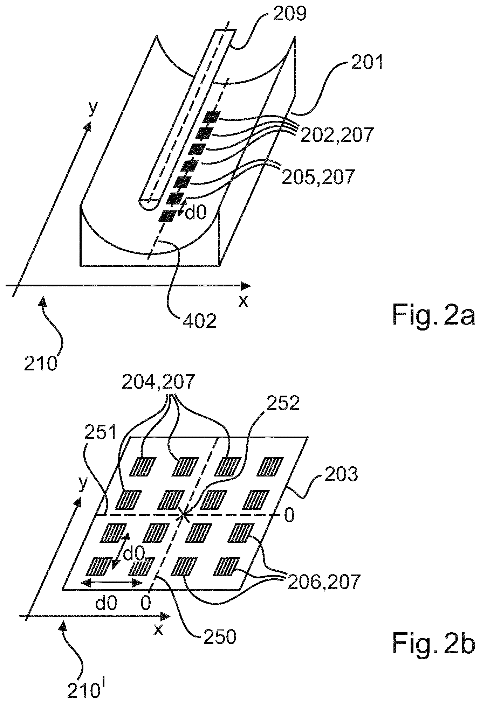

Fig. 2a zeigt eine perspektivische Darstellung einer linearen Parabolantennenvorrichtung 201 mit einem linearen Hyperbol 209 gemäß einem exemplarischen Ausführungsbeispiel der vorliegenden Erfindung. Die Sendeeinrichtungen 202 und die Empfangseinrichtungen 205 sind linear parallel zu der in Fig. 2a dargestellten y-Achse des mit Bezugsziffer 210 bezeichneten Koordinatensystems 210 angeordnet. Die Zusammenfassung der Sendeeinrichtungen 202 und Empfangseinrichtungen 205 kann als Antennengruppe bezeichnet werden Die einzelnen Sendeeinrichtungen 202, 204, 207 und/oder Empfangseinrichtungen 205, 206, 207 weisen untereinander einen Abstand von d₀ auf und orientieren sich an einem Raster.

Fig. 2b zeigt ein zweidimensionales (2D) Antennenarray. Das zweidimensionale Antennenarray weist eine Ausdehnung in zwei Raumrichtungen, beispielsweise in die x-Richtung und die y-Richtung auf, wie durch das Koordinatensystem 210' angedeutet. Fig. 2b zeigt die Anordnung der Sendeeinrichtungen 204 und der Empfangseinrichtungen 206 auf dem Antennenarray. Anstelle von reinen Sendeeinrichtungen 204, und reinen Empfangseinrichtungen 206 können Sende-/Empfangseinrichtungen 207 genutzt werden, die an derselben Position senden und zugleich auch empfangen können. Die einzelnen Sendeeinrichtungen und/oder Empfangseinrichtungen weisen untereinander einen Abstand auf, der kleiner oder gleich d₀ = λ ist, wobei λ die Wellenlänge des Sendesignals und/oder des Empfangssignals angibt. In einem Beispiel kann der Abstand auch den Wert λ/2 betragen, also die halbe Wellenlänge der verwendeten Sendesignale.

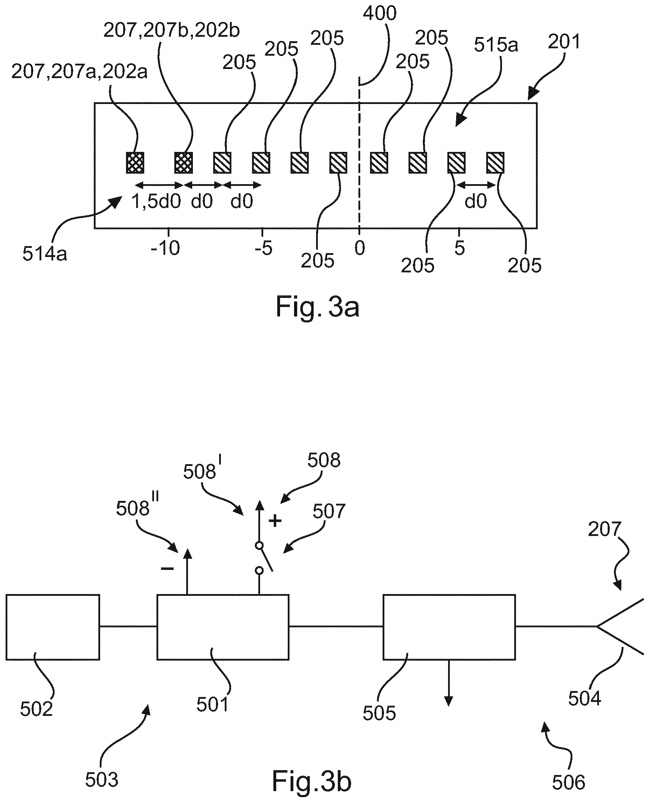

Die Fig. 3a zeigt eine Antennenvorrichtung 201 oder ein MIMO (Multiple Input Multiple Output) System mit linear angeordneten Sendekanälen 202a, 202b und Empfangskanälen 205 gemäß einem exemplarischen Ausführungsbeispiel der vorliegenden Erfindung. Da Sende-/Empfangskanäle 207, 207a, 207b sowohl als Sendeeinrichtungen 504 oder Sendekanäle 202, 202a, 202b genutzt werden können, als auch als Empfangseinrichtungen 504 oder Empfangskanäle 205, 205a, 205b, können sie nach Belieben reine Sendeeinrichtungen 202, oder reine Empfangseinrichtungen 205, ersetzen. Da Sendekanäle 202, 202a, 202b und Sendeeinrichtungen 504, 504a'''', 504b'''', 504a''''', 504b'''''' im Wesentlichen zur Generierung eines Sendesignals beitragen, können sie allgemein als Sendeelemente 202, 202a, 202b bezeichnet werden und die Begriffe können zur Vereinfachung gleichartig benutzt werden. Ähnliches mag für die Empfangskanäle 205, 205a, 205b und die Empfangseinrichtungen 504, 504c, 504d gelten und auch für Sende-/Empfangskanäle 207 gelten. Auch die Empfangskanäle können als Empfangselemente oder Empfangseinrichtungen bezeichnet werden und die Sende-/Empfangskanäle können als Sende-/Empfangseinrichtungen oder Sende-/Empfangselemente bezeichnet werden.

Die Antennenvorrichtung 201 weist acht Empfangskanäle 205 auf, die jeweils in einem Abstand d₀ im Bereich von einer Wellenlänge d₀ = λ angeordnet sind. Dabei sind die Empfangskanäle 205 im Wesentlichen symmetrisch zu einer Bezugslinie 400 angeordnet. Ebenfalls in einem Abstand von d₀ = λ ist an der Position -9 λ/2 ausgehend von der Bezugslinie 400 ein zweiter Sendekanal 202b angeordnet. In einem Abstand von 1,5 λ zueinander ist der erste 202a und der zweite 202b Sendekanal angeordnet. Der erste und zweite Sendekanal 202a, 202b ist jeweils als ein entsprechend angesteuerter Sende-/Empfangskanal 207a, 207b ausgebildet. Bezogen auf die Bezugslinie 400 ergibt sich so insgesamt ein unsymmetrischer Aufbau aus Sendekanälen 202a, 202b, 207a, 207b und Empfangskanälen 205. Die Sendekanäle 202a, 202b, Sende-/Empfangskanäle 207a, 207b und/oder Empfangskanäle 205 können als Sendepatche ausgebildet sein. Insbesondere können die Sendeeinrichtung 504, die Empfangseinrichtung 504 und/oder die Sende-/Empfangseinrichtung als ein Patch ausgebildet sein. Ein Patch bezeichnet eine einzelne Antenne, die auf einem Substrat aufgebracht ist.

Um bei der digitalen Strahlformung Gitterkeulen, sog. Grating-Lobes, zu vermeiden sollte das Abstandskriterium erfüllt sein, nach dem die physikalische Distanz zwischen zwei benachbarten Antennenelementen kleiner oder gleich der halben Wellenlänge λ/2 der verwendeten Radarsignale, Sendesignale und/oder Empfangssignale sein soll. Durch diese Designvorgabe kann es jedoch bei der Realisierung bei hohen Frequenzen und einer vorgegebenen physikalischen Ausdehnung der Antenne oder einer entsprechend vorgegebenen breiten physikalischen Apertur zu einer hohen Anzahl von Antennenelementen kommen und somit zu einem hohen Schaltungsaufwand, der zu hohen Herstellkosten eines Radargeräts oder eines Füllstandgeräts führt, welches eine entsprechende Antennenvorrichtung verwendet.

Fig. 3b zeigt ein Blockdiagramm, das den prinzipiellen Aufbau eines Sende-/Empfangskanals 207 angibt, gemäß einem exemplarischen Ausführungsbeispiel der vorliegenden Erfindung. Der Sende-/Empfangskanal 207 oder der Sendekanal mit einer Sende-/Empfangsmischeinrichtung 505 weist eine Signalquelle 502 oder einen VCO (Voltage Controlled Oscillator) 502 auf. Die Sende-/Empfangsmischeinrichtung 505 kann wegen ihrer Sende- und Empfangsfunktion auch als Transmitter/Receiver 505 oder Transceiver 505 bezeichnet werden. Die Signalquelle 502 dient dem Erzeugen eines Sendesignals mit einer niedrigen Grundfrequenz. Der Sende-/Empfangskanal 207, welcher zum Senden und Empfangen eines Signals ausgebildet ist, ist Teil eines FMCW Systems 503. Insbesondere ist dieser Kanal Teil einer Antennenvorrichtung 201. Der Sende-/Empfangskanal 207 nutzt einen Sechsfachvervielfacher 501. Diese Frequenzumsetzeinrichtung 501 empfängt ein Sendesignal, welches von dem VCO 502 oder von der Signalquelle 502 mit einer Grundfrequenz von etwa 13 GHz erzeugt wird, setzt dieses niederfrequente Sendesignal auf ein Sendesignal in dem Betriebsfrequenzbereich um 79 GHz oder auf die Sendefrequenz um 79 GHz. In einem Beispiel kann eine Frequenzrampe von 78,5 GHz bis 79,5 GHz genutzt werden. Dabei mag der Wert 79 GHz die Mittenfrequenz des von der Frequenzrampe abgedeckten Bereichs angeben. Der Frequenzbereich wird regelmäßig und gleichmäßig durchlaufen, so dass ein regelmäßiges Signal entsteht, dessen Frequenz über einen Zeitverlauf gleichmäßig von 78,5 GHz bis 79,5 GHz erhöht wird, während es gesendet wird. Somit deckt das Sendesignal genauso wie das reflektierte Empfangssignal eine Bandbreite von 1 GHz ab.

Um die Frequenzrampe zu erzeugen, wird von dem VCO ein Signal mit einer variablen Grundfrequenz im Bereich zwischen 13,08333 GHz bis 13,25 GHz erzeugt, das von der Frequenzumsetzeinrichtung auf die Frequenzrampe von 78,5 GHz bis 79,5 GHz umgewandelt wird. Entsprechend mag der Durchlassbereich eine Mittenfrequenz von 79 GHz auch eine Bandbreite von 1 GHz aufweisen. Alternativ zu einer Frequenzrampe kann auch ein Sendesignal mit konstanter Frequenz genutzt werden, die aus dem Bereich von 78,5 GHz bis 79,5 GHz gewählt wird. Entsprechend kann ein Sendesignal mit einer Grundfrequenz genutzt werden, die aus dem Bereich 13,08333 GHz bis 13,25 GHz gewählt wird. In einem anderen Beispiel kann das Sendesignal mit einer konstanten Frequenz oder einer variablen Frequenzrampe verschickt werden, die aus dem W-Band gewählt ist. Das W-Band ist ein in der Hochfrequenztechnik definiertes Frequenzband, das im Bereich zwischen 75 GHz und 110 GHz liegt.

Der aktive Frequenzvervielfacher 501 oder die Frequenzumsetzeinrichtung 501 multipliziert die Grundfrequenz des von dem VCO 502 generierten Sendesignals mit einem konstanten Faktor, beispielsweise mit dem Faktor 6, um so beispielsweise bei Einsatz eines FMCW (Frequency-Modulated Continuous-Wave) Signals aus der Frequenzrampe um 13 GHz, die mittels der Signalquelle 502 und einer in Fig. 3b nicht dargestellten PLL (Phase Lock Loop) erzeugt wird, eine Frequenzrampe um 79 GHz zu generieren, beispielsweise von 78,5 GHz bis 79,5 GHz. In Fig. 3b verläuft die Signalausbreitung eines Sendesignals von links nach rechts, von der Signalquelle 502 zu dem Sende-/Empfangsabschnitt 506, welcher die Antenne 201, 203 oder die Sendeeinrichtung 504 und den Transceiver 505 aufweist. Der in Fig. 3b dargestellte Sende-/Empfangskanal 207 ist in der Lage, die von der Signalquelle 502 bereitgestellte Frequenzrampe um 13 GHz, beispielsweise im Bereich zwischen 13,08333 GHz bis 13,25 GHz, mit der versechsfachenden Frequenzumsetzeinrichtung 501 oder dem versechsfachenden Multiplier 501 in einen Frequenzbereich im W-Band hochzumischen. Der Sende-/Empfangskanal 207 kann einem Zeitschema folgend an- und ausgeschaltet werden, indem mittels einer Schalteinrichtung 507 die Energiezufuhr 508 an- und ausgeschaltet wird, um so ein zeitgesteuertes Umsetzen der Grundfrequenz der Signalquelle 502 zu steuern, beispielsweise das Umsetzen der Grundfrequenz von 13 GHz in die Sendefrequenz von 75 GHz. Die Schalteinrichtung 507 ist in den positiven Energiezufuhranschluss 508' eingebaut, um mittels der Schalteinrichtung 507 eine Energiezufuhr zu der aktiven Frequenzumsetzeinrichtung 501 entsprechend dem Zeitschema an- und auszuschalten oder zu unterbrechen.

Somit lässt sich durch das zeitgesteuerte An- und Abschalten der Schalteinrichtung 507 ein zeitgesteuertes Umsetzen der Grundfrequenz des Sendesignals auf die Sendefrequenz erreichen und folglich ein zeitgesteuertes Senden mittels des Sende-/Empfangskanals 207 durchführen, ohne auf HF-Schalter zurückgreifen zu müssen. Eine ähnliche Erklärung gilt für reine Sendekanäle 202, 202a, 202b und reine Empfangskanäle 205.

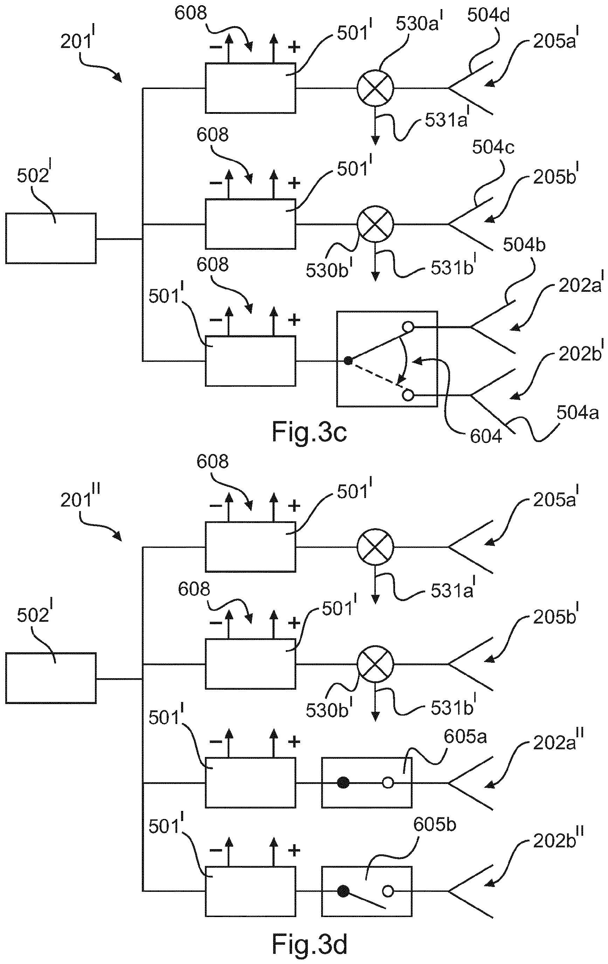

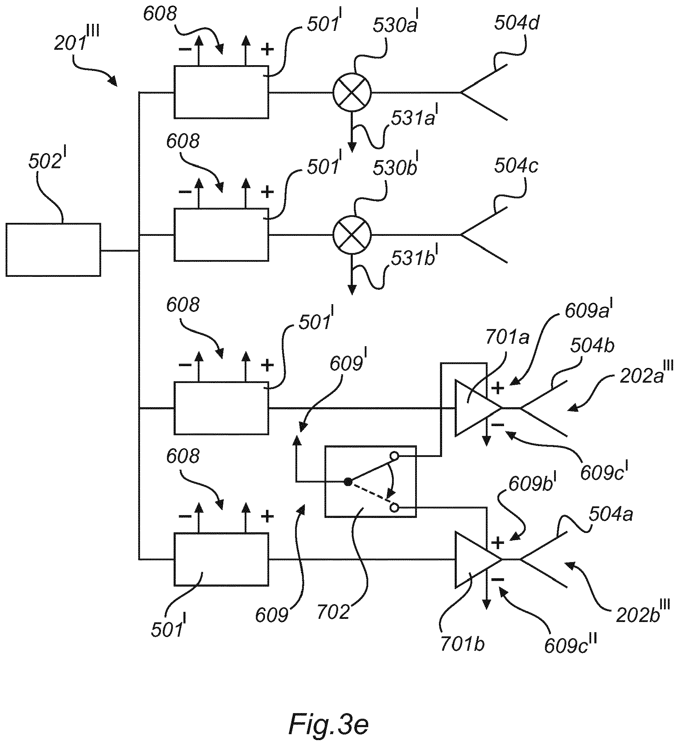

Die Fig. 3c zeigt den Aufbau von Sendekanälen 202a', 202b' und Empfangskanälen 205a', 205b' mit einem Umschalter 604 gemäß einem exemplarischen Ausführungsbeispiel der vorliegenden Erfindung. Die Fig. 3d zeigt eine Antennenvorrichtung 201" mit jeweils einem Hochfrequenzschalter in jedem Sendekanal 202a", 202b" gemäß einem exemplarischen Ausführungsbeispiel der vorliegenden Erfindung. Die Fig. 3e zeigt eine Antennenvorrichtung 201'", bei der ein zeitgesteuertes Aktivieren der Sendekanäle 202a''', 202b''' mittels geschalteter Sendeverstärker 701a, 701b realisiert wird, gemäß einem exemplarischen Ausführungsbeispiel der vorliegenden Erfindung.

Fig. 4 zeigt eine Antennenvorrichtung 201 "" oder ein MIMO System mit einer Frequenzumsetzeinrichtung 501a, 501b, welche zum zeitgesteuerten Umsetzen einer Grundfrequenz eines Sendesignals auf eine Sendefrequenz in einem Frequenzdurchlassbereich einer Sendeeinrichtung 504a'''', 504b'''' eingerichtet ist, gemäß einem exemplarischen Ausführungsbeispiel der vorliegenden Erfindung. Die Empfangskanäle 205a, 205b sind wie die Empfangskanäle der Fig. 3c aufgebaut und weisen die Empfangsfrequenzumsetzeinrichtungen 501a', 501b' auf, die fest mit einer Energiequelle 608, 608 verbunden sind. Die Empfangsfrequenzumsetzeinrichtung 501a' 501b' reicht ein frequenzerhöhtes Lokaloszillatorsignal an die Empfangsmischeinrichtung 530a', 530b' weiter, um ein über die Empfangseinrichtung 504c, 504d empfangenes Empfangssignal in ein ZF (Zwischenfrequenz)-Signal herunterzumischen. Zur Generierung des Lokaloszillatorsignals in dem für den Betrieb der Empfangsmischeinrichtung 530a', 530b' zum Mischen geeigneten Frequenzbereich wird von der Empfangsfrequenzumsetzeinrichtung 501a', 501b' ein Signal mit vervielfachter Grundfrequenz bereitgestellt. Wird die Empfangsmischeinrichtung 530a', 530b' über die Empfangsfrequenzumsetzeinrichtung 501a', 501b'mit einem Signal mit einer ausreichend hohen Lokaloszillationsfrequenz bereitgestellt, kann ein über die Empfangseinrichtung 504c, 504d empfangenes Empfangssignal auf ein ZF-Signal oder Empfangszwischenfrequenzsignal heruntergemischt werden. Die Empfangsfrequenzmischeinrichtung 530a', 530b' stellt das ZF-Empfangssignal über den Ausgang 531a', 531b' oder den ZF-Ausgang 531a', 531b' bereit. Dieses ZF-Signal kann in einer Auswerteeinrichtung und/oder in einer Verarbeitungseinrichtung ausgewertet werden, die in Fig. 4 nicht dargestellt ist.

Das Sendesignal, welches die Signalquelle 502 erzeugt, wird über das Verteilnetz 410 oder LO-Verteilnetz 410 in die jeweiligen Empfangskanäle 205a, 205b oder Sendekanäle 202a, 202b verteilt. Das Sendesignal wird insbesondere an die Empfangsfrequenzumsetzeinrichtungen 501a', 501b' und Frequenzumsetzeinrichtungen 501a, 501b der Sendekanäle bereitgestellt. Ähnlich kann auch ein Sende-/Empfangskanal 207, 207a, 207b mit dem niederfrequenten Sendesignal versorgt werden. Über den Niederfrequenz (NF)-Schalter 507' kann ein positiver Versorgungsanschluss 409a', 409b'der Frequenzumsetzeinrichtungen 501a, 501b des ersten Sendekanals 202a und des zweiten Sendekanals 202b mit einem positiven Anschluss 409' einer Energieversorgung verbunden werden. Die Energieversorgung 409 ist in Fig. 4 nicht gezeigt, kann aber in einem Beispiel dieselbe Energieversorgung 409, 608 sein, die auch für die Frequenzumsetzeinrichtungen 501a', 501b', 501a, 501b genutzt wird. Durch das Schalten der Energieversorgungsleitungen 409a', 409b' kann ein zeitgesteuertes Sendesignal erzeugt werden. Der NF-Schalter 507' wird mit einem Zeitmultiplexverfahren angesteuert und kann entsprechend dem Ansteuerrhythmus für die zeitgesteuerte Umsetzung der Grundfrequenz auf die Sendefrequenz sorgen. Da der NF-Schalter 507' als Wechselschalter 507' ausgeführt ist, ist sichergestellt, dass immer nur ein Sendekanal 202a, 202b zur gleichen Zeit aktiv ist. Die Frequenzumsetzeinrichtungen 501a, 501b sind auch mit negativen Anschlüssen 409b', 409b" der Energieversorgung 409 verbunden.

Fig. 5 zeigt den Aufbau einer Antennenvorrichtung 201''''' mit Sende-/Empfangskanälen 207a, 207b gemäß einem exemplarischen Ausführungsbeispiel der vorliegenden Erfindung. Zusätzlich zu der ersten Frequenzumsetzeinrichtung 501a des ersten Sende-/Empfangskanals 207a ist eine Sende-/Empfangsmischeinrichtung 901a vorgesehen, welche es ermöglicht über die Antennen 504a''''', 504b'''''' oder die Sendeeinrichtungen 504a''''', 504b'''''' Signale zu senden und zu empfangen. Um das gleichzeitige Senden und Empfangen zu ermöglichen ist die Sende-/Empfangsmischeinrichtung 901a, 901b jeweils mit einer Frequenzumsetzeinrichtung 501a, 501b verbunden, welche wiederum über die Umschalteinrichtung 507' für ein zeitgesteuertes Aktivieren der Frequenzumsetzeinrichtung 501a, 501b sorgt. Mittels des Sende-/Empfangskanals 207a, 207b kann ein Sendesignal versendet werden und ein Empfangssignal, welches durch Reflexion aus dem Sendesignal hervorgegangen ist, empfangen werden. Die Sendeeinrichtungen 504a''''', 504b'''''' sind für einen bidirektionalen Betrieb in dem Frequenzdurchlassbereich eingerichtet. Das Empfangssignal kann an den Ausgängen 902a, 902b der Sende-/Empfangsmischeinrichtungen 901a, 901b als ein ZF (Zwischenfrequenz)-Empfangssignal bereitgestellt werden. Zusätzlich zu dem Empfang mittels der Sende-/Empfangskanäle 207a, 207b kann ein Empfang mit den reinen Empfangskanälen 205a, 205b stattfinden.

Zwischen der Signalquelle 502 und den Frequenzumsetzeinrichtungen 501a, 501b der Sende-/Empfangskanäle 207a, 207b sind Isolatoren 560a, 560b angeordnet. Diese Isolatoren 560a, 560b können verhindern, dass Signale in die Signalquelle 502 zurückreflektiert werden, wenn einer der Frequenzumsetzeinrichtungen 501a, 501b mittels der Umschalteinrichtung 507' von der Energieversorgung 409 getrennt ist. Ein Isolator oder Hochfrequenzisolator 560a, 560b leitet ein elektromagnetisches Signal nur in eine Richtung weiter, beispielsweise von der Signalquelle 502 zu der Frequenzumsetzeinrichtung 501a, 501b. Ein Isolator kann beispielsweise verhindern dass das erste Empfangssignal, das zweite Empfangssignal und/oder das Empfangssignal zu der Signalquelle und/oder den jeweils anderen Sendern und/oder Empfängern gelangt.

Die Verrechnung oder Verarbeitung der einzelnen Empfangskanäle 205a, 205b und/oder der Sende-/Empfangskanäle 207a, 207b erfolgt nach Verfahren zur Bildung von virtuellen Co-Arrays, wodurch sich eine Verbreiterung der Apertur der physikalischen Antennenvorrichtung 201, 201'''', 201''''' ergibt.

Im Folgenden sind Sendekanäle 202, 202a, 202b, Empfangskanäle 205, 205a, 205b und/oder Sende-/Empfangskanäle 207, 207a, 207b durch ihre Signalverläufe oder Energieverteilungen ihrer Signale dargestellt. Für diese Signalverläufe sollen der Einfachheit halber auch die Bezeichnungen der physikalischen Kanäle gleichbedeutend verwendet werden.

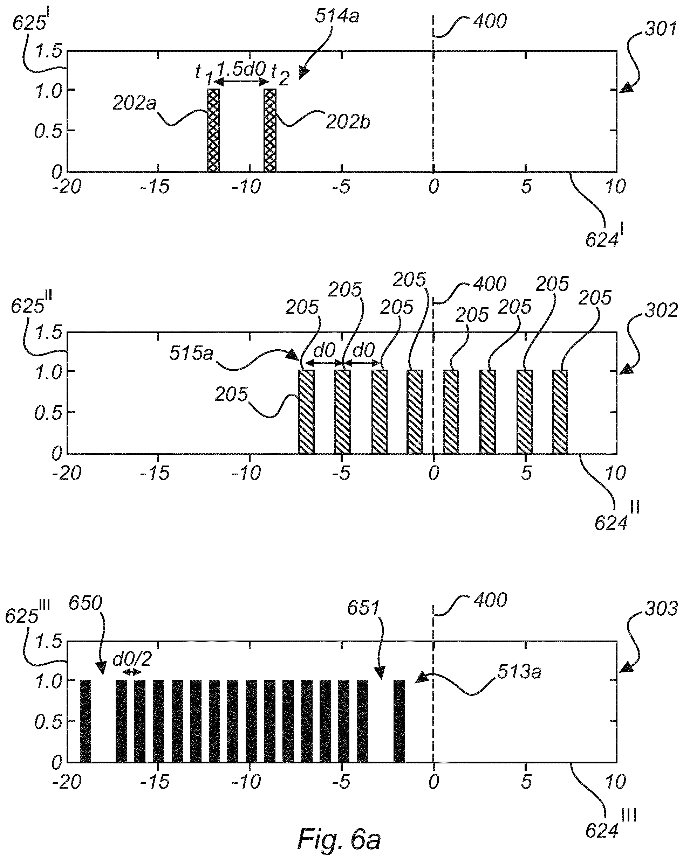

Fig. 6a zeigt ein Simulationsdiagramm zur Darstellung eines virtuellen Co-Arrays 513a gemäß einem exemplarischen Ausführungsbeispiel der vorliegenden Erfindung. In dem Simulationsdiagramm zeigt das Sendediagramm 301 die Beaufschlagung eines Sendekanals einer Antennenvorrichtung 201 mit einem Sendesignal zu unterschiedlichen Zeitpunkten t1, t2. Die Ordinate 625' des Sendediagramms 301 gibt die Gewichtung eines Sendesignals an, das entweder auf einen Sendekanal und/oder auf einen Sende-/Empfangskanal 207 beaufschlagt wird. Die Abszisse 624' gibt eine örtliche

Verteilung einer Position eines Sendekanals 202a, 202b, 207, 207a, 207b innerhalb des Arrays oder der Sendevorrichtung an. Ebenso wie in Fig. 3a für die Antennenvorrichtung 201 von einer Bezugslinie 400 für die Bestimmung der Positionen der einzelnen Kanäle ausgegangen wird, werden Positionen in den Simulationsdiagrammen 301, 302, 303 auf die Bezugslinie 400 bezogen. Die Abszisse 624' ist auf die Größe λ/2 bezogen.

Da es sich bei den im Sendediagramm 301 dargestellten Sendesignalen 202a, 202b um die Ausgänge von Sendekanälen handelt, kann auch das im Sendediagramm 301 dargestellte Sendesignal als Sendekanal bezeichnet werden. Der erste Sendekanal 202a befindet sich an der Position -12 λ/2 und der zweite Sendekanal 202b befindet sich an der Position -9 A/2. Entsprechend sind in dem Empfangsdiagramm 302 die Empfangssignale oder Empfangskanäle 205 dargestellt. Wie in Fig. 3a befinden sich die Empfangskanäle an den Positionen -7 λ/2, -5 λ/2, -3 λ/2, -1 λ/2, +1 λ/2, +3 λ/2, +5 λ/2 und +7 λ2. Auch im Empfangsdiagramm 302 ist an der Ordinate 625" eine Gewichtung des Empfangssignals angegeben. Die Abszisse 624" gibt wiederum die Position der Empfangskanäle 205 bezogen auf λ/2 an.

Die Sendesignale aus dem Sendediagramm 301 können mit den Empfangssignalen aus dem Diagramm 302 so errechnet werden, dass sich das in dem Co-Arraydiagramm 303 dargestellte errechnete virtuelle Co-Array 513a ergibt. Um von den Sendesignalen 301 und Empfangssignalen 302 auf das virtuelle Co-Array 513a in dem Co-Arraydiagramm 303 zu gelangen, wird die Methode der diskreten Faltung der Positionen der Sendekanäleund somit der Positionen der von diesen Kanälen bereitgestellten Signale und der Positionen der Empfangskanäle 205 angewendet, welche in dem Empfangsdiagramm 302 dargestellt sind. Das Co-Array 513a weist eine Apertur oder Breite auf, die von -19 λ/2 bis -2 λ/2 reicht. Die Abstände der einzelnen Arrayelemente des virtuellen Co-Arrays 513a betragen im Wesentlichen λ/2 oder d₀/2 und weisen an den Stellen -18 λ/2 und -3 λ/2 die Lücken 650 und 651 auf. Das Co-Array 513a kann als die Apertur eines berechneten Empfangsarrays aufgefasst werden, die sich ergeben würde, wenn sich nur ein einziger Sendekanal in der Mitte der Empfangskanäle 205 befinden würde, d. h. wenn sich lediglich ein Sender auf der Bezugslinie 400 befinden würde.

Die in dem Sendediagramm 301 dargestellten Signale der Sendekanäle 202a, 202b können als ein Sendearray 514a aufgefasst werden. Die Empfangskanäle 205 aus dem Empfangsdiagramm 302 können als ein Empfangsarray 515a aufgefasst werden. Das virtuelle Array 513a weist im Vergleich zum physikalischen Array 201 oder zu der physikalischen Antennenvorrichtung 201, welche das Sendearray 514a und das Empfangsarray 515a aufweist, eine größere Apertur auf. Das physikalische Array 201 reicht von -12 λ/2 bis +7 λ/2 und weist somit eine Breite von 19 λ/2 auf. Das virtuelle Array 513a reicht von -19 λ/2 bis -2 λ/2 und weist somit eine Apertur von 17 λ/2 auf, wobei die Apertur des virtuellen Arrays 513a dichter besetzt ist.

Eine diskrete Faltung ist möglich, indem das Senden der Sendesignale zu unterschiedlichen Zeitpunkten t1, t2 stattfindet. Das zeitlich versetzte Senden kann durch Hochfrequenzschalter 604, 605a, 605b oder geschaltete Sendeverstärker 701a, 701b, 702 realisiert werden. Hierbei wird durch Umschalten oder Ein-/Ausschalten dafür gesorgt, dass die unterschiedlichen Sendekanäle zu unterschiedlichen Zeitpunkten aktiv sind und somit das Sendesignal zwischen zwei Antennen hin- und hergeschalten wird. Das Schalten der Frequenzumsetzeinrichtungen 501a, 501b, 501 mittels Schalteinrichtung 507' kann den Einsatz von teuren und aufwändigen Hochfrequenzschaltern verhindern.

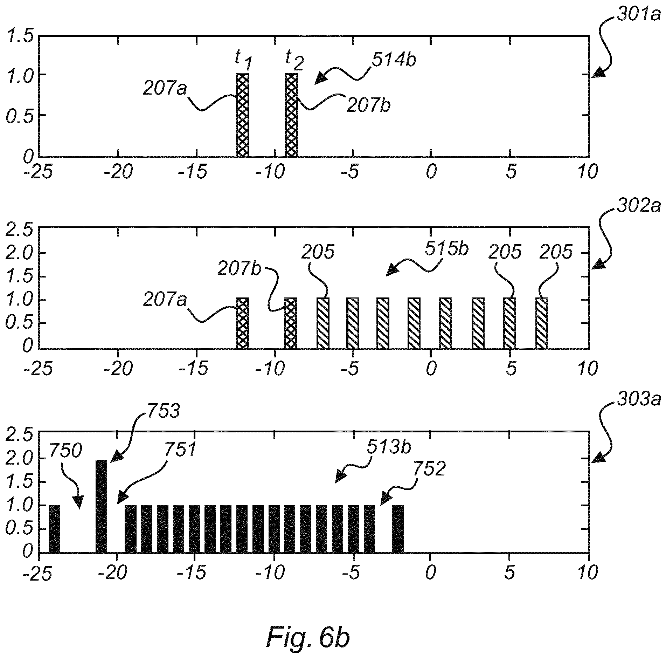

Fig. 6b zeigt ein Simulationsergebnis einer Antennenvorrichtung mit geschalteten Frequenzvervielfachern 501a, 501b wobei Sendekanäle als Sende-/Empfangskanäle 207a, 207b genutzt werden, gemäß einem exemplarischen Ausführungsbeispiel der vorliegenden Erfindung. Dadurch, dass zumindest ein Teil der Sendekanäle 202a, 202b auch zum Empfang verwendet werden, können auch von den Sendestufen Empfangssignale zusätzlich zu den reinen Empfangssignalen empfangen werden, die über die Empfangskanäle 205a, 205b ermittelt werden. Da somit die Anzahl der Empfangskanäle vergrößert werden kann, können größere oder dicht besetzte virtuelle Antennenaperturen aufgebaut werden. In Fig. 6a weist das Sendediagramm reine Sendekanäle 202a, 202b auf und das Empfangsdiagramm 302 reine Empfangskanäle 205, wobei die Anzahl m der Sender gleich 2 und die Anzahl n der Empfänger gleich 8 ist. Es ergibt sich das virtuelle Co-Array 513a mit m x n = 16 Elementen. Die Fig. 6a und insbesondere das Co-Arraydiagramm 303 zeigt somit ein Co-Array 513a, welches mit einer zeitlich umschaltbaren Antennenvorrichtung 201"" aus Fig. 4 erzeugbar ist.

Werden Sende-/Empfangskanäle 207a, 207b vorgesehen, wie es in Fig. 5 dargestellt ist, lässt sich das in Fig. 6b dargestellte Co-Array 513b bilden. Das Sendediagramm 301a zeigt die m = 2 Sende-/Empfangskanäle 207a, 207b, welche zu den abwechselnden Zeitpunkten t1 und t2 zum Senden genutzt werden können. Da die Sende-/Empfangskanäle 207a, 207b auch zum Empfangen von gesendeten Signalen verwendet werden können, tragen sie auch zur Bildung des im Empfangsdiagramm 302a dargestellten Empfangsarray 515b bei. Das Sendearray 514b wird von den Sende-/Empfangskanälen 207a, 207b gebildet. Das Co-Arraydiagramm 303a stellt das von der Antennenvorrichtung 201''''' mit Sende-/Empfangskanälen 207a, 207b gebildete virtuelle Array 513b dar. Verglichen mit der Breite des Antennenarrays 513a aus Fig.6a, das sich bei reinen Sendekanälen 202a, 202b und reinen Empfangskanälen 205 ergibt und von -2 λ/2 bis -19 λ/2 reicht, hat sich die Apertur des Co-Arrays 513b aufgrund der im Empfangsarray 515b zusätzlich vorhandenen Empfangssignale verbreitert.

Die Apertur des virtuellen Co-Arrays 513b reicht von -24 λ/2 bis -2 A/2. Allerdings weist das virtuelle Co-Array 513b die Aperturlücken 750, 751, 752 und die Signalerhöhung 753 mit einer doppelten Gewichtung auf. Bei der doppelten Gewichtung handelt es sich um ein Antennenelement, das an der Position -21 λ/2 entsteht und eine Gewichtung mit Faktor 2 aufweist. Die doppelte Gewichtung entsteht durch die bei der zur Bildung des virtuellen Co-Arrays 513b eingesetzten Faltung. An dieser Position -21 λ/2 werden durch die Faltung zwei Antennenelemente auf eine einzige Position abgebildet. Bei der Abbildung liefern zwei Empfänger ein identisches Signal und somit die gleiche Information. Zu dieser Überlagerung von Signalen kann es kommen, wenn das Signal von dem Empfänger 207b an der Position -9 λ/2 während des Sendens des Senders an der Position -12 λ/2 zum Zeitpunkt t1 und das Signal von dem Empfänger an der Position -12λ/2 während des Sendens des Senders an der Position -9 λ/2 zum Zeitpunkt t2 identisch sind. Folglich gibt es dann ein Signal, das doppelt vorhanden ist und sich in dem berechneten Co-Array 513b um den Faktor 2 erhöht. Da wegen der Verwendung von Sende-/Empfangskanälen das Sendearray 514b m = 2 Sendekanäle 207a, 207b und das Empfangsarray 515b m = 2 Sende-/Empfangskanäle 207a, 207b und n = 8 reine Empfangskanäle 205 aufweist, ergibt sich ein virtuelles Co-Array 513b mit m x (m + n) Signalen, also 20 Signalen, wobei sich in der Signalerhöhung 753 die Überlagerung von 2 Signalen bemerkbar macht. An der Position -21 λ/2 werden mehrere Empfänger im Co-Array 513b abgebildet.

Da eine Sende-/Empfangsmischeinrichtung 901a, 901b ein frequenzvervielfachtes Eingangssignal benötigt, um einen Lokaloszillator zu haben und da jedoch die Frequenzvervielfacher 501a, 501b entsprechend des Zeitschemas auch Unterbrechungspausen aufweisen, während denen kein Sendesignal generiert wird, folgen die Empfangssignale auch diesem Schema. Folglich können auch während der Übertragungspausen keine Empfangssignale gebildet werden. Im Fall einer Sendepause eines Senders kann der zugehörige Empfänger somit ebenfalls nicht empfangen, da ihm ein Lokaloszillatorsignal aufgrund des abgeschalteten Frequenzvervielfachers 501a, 501b fehlt.

Das Co-Array 513b wird mittels Sende-/Empfangskanälen 207a, 207b gebildet, die zeitlich nacheinander an- und abgeschaltet werden, beispielsweise zu den Zeitpunkten t1, t2. Bei der Bildung eines virtuellen Co-Arrays 513b, können die vorhandenen Empfangspausen durch Methoden der digitalen Signalverarbeitung berücksichtigt werden.

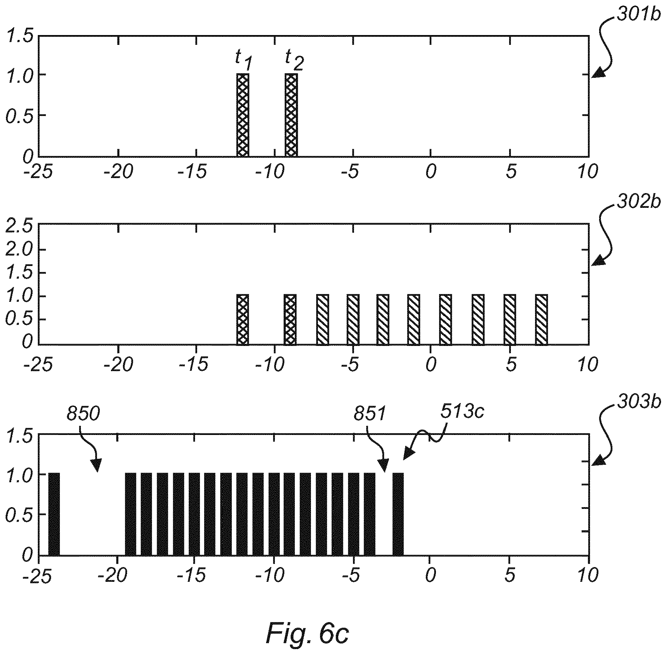

Fig. 6c zeigt Simulationsdiagramme zum Bilden eines virtuellen Co-Arrays 513c unter Berücksichtigung von einem adaptiven Faltungskern gemäß einem exemplarischen Ausführungsbeispiel der vorliegenden Erfindung. Die Sendesignale 301b der Fig. 6c entsprechen den Sendesignalen der Fig. 6b. Die Empfangssignale 302b der Fig. 6c entsprechen den Empfangssignalen 302a der Fig. 6b. Bei der Bildung der Faltungssumme aus den Sendesignalen 301a, 301b und Empfangssignalen 302a, 302b kann adaptiv der Faltungskern geändert werden, abhängig davon, welche Empfänger zur Sendezeit t1, t2 deaktiviert sind. Durch das Bilden der Faltungssumme mit einem adaptiven Faltungskern, lässt sich eine Apertur aus m x n + m Antennenelementen 513c emulieren, welche in Fig. 6c von -24 λ/2 bis -2 λ/2 reicht und die Signalerhöhung 753 nicht mehr aufweist. Das virtuelle Co-Array 513c, welches durch eine diskrete Faltung mit einem adaptiven Faltungskern gebildet worden ist, weist lediglich zwei Aperturlücken 850, 851 auf. Der Faltungskern wird bei einer diskreten Faltung genutzt und muss angepasst werden, wenn Sendeempfänger 207, 207a, 207b oder Sende-/Empfangskanäle 207, 207a, 207b verwendet werden, die nicht zu jeder Zeit empfangen können. Die diskrete Faltung ist eine Summe über eine Vielzahl von Elementen beispielsweise k Elemente. Die Bildung des virtuellen Arrays 513c weist die Berechnung der diskreten Faltung der diskreten Sende- und Empfangsvektoren auf. Die bei dieser diskreten Faltung genutzten Sende- und Empfangsvektoren entsprechen den Positionen der Sende- und Empfangselemente. Bei jedem Summand der Faltungsoperation wird der Vektor des Empfängerarrays 515b angepasst, da dieser Vektor aufgrund von ggf. abgeschalteten Sende-/Empfangseinrichtungen 207, 207a, 207b nicht bei jedem Senden zu jedem Zeitpunkt t1, t2 gleich ist. Der adaptive Faltungskern kann daher als ein adaptives Anpassen des Faltungskerns der Faltungsoperation aufgefasst werden.

Durch die Eliminierung der Signalerhöhungen 753 können Nebenkeulen stark gedämpft werden, die in einem aus dem Co-Aarray 513b, 513c resultierenden Antennendiagramm entstehen. Es können zudem Fensterfunktionen eingesetzt werden um das Antennendiagramm zu verbessern. Diese Fensterfunktionen können auf die Gewichtungsfaktoren des Co-Arrays 513c angewandt werden, um die Nebenkeulen weiter zu dämpfen. Beispielsweise kann eine Fensterfunktion vorsehen, Co-Arrayeelemente des virtuellen Co-Arrays 513b, 513c am Rand des Co-Arrays, z.B. im Bereich von -24 λ/2 und -2 λ/2, schwächer zu gewichten als die Elemente in der Mitte des Co-Arrays im Bereich von etwa -12 A/2. Zur schwächeren Gewichtung kann beispielsweise ein Gewichtungsfaktor genutzt werden, der kleiner als 1 ist (<1).

Zwar sind in dem Co-Array 513b durch die Signalerhöhung 753 in der selben Apertur mehr Antennenelemente enthalten als in dem Co-Array 513c, da bei der Apertur des Co-Arrays 513c berücksichtigt ist, dass die Empfänger der in Sendepausen abgeschalteten Sende-/Empfangseinrichtungen nicht empfangen können und Signale, die zu einer Signalerhöhung führen können weggelassen werden. Jedoch kann es das gleichmäßig gewichtete Co-Array 513c im Wesentlichen vermeiden, dass bei der weiteren Signalverarbeitung nach der Co-Arraybildung, Gewichtungssprünge im Co-Arraydiagramm 303b vorhanden sind. Daher kann man beispielsweise den Aufwand für eine Signalnachverarbeitung reduzieren, wenn man vorsieht, bereits jedes Co-Arrayelement des Co-Arrays 513c mit dem Faktor 1 zu gewichten, wie im Co-Arraydiagramm 303b der Fig. 6c dargestellt. Sind Co-Arrayelemente mit dem Faktor 2 gewichtet, wie bei einer Signalerhöhung 753, kann die Signalverarbeitung beispielsweise vorsehen, den Mittelwert aus beiden Signalen der Signalerhöhung 753 zu bilden oder das Signal eines Kanals mit der Signalerhöhung 753 wegzulassen, um die Signalerhöhung zu reduzieren.

Die Anzahl der Antennenelementen 513c wird nach der Formel m x n + m gebildet, wenn es Sendeempfänger 207 gibt, die nicht empfangen können, während sie nicht Senden. Diese Formel ergibt sich aus der Multiplikation der Anzahl m der Sendeelemente und der Anzahl n der reinen Empfangselemente 205 und der Anzahl der zusätzlichen Empfangselemente, die entstehen wenn Transceiver eingesetzt werden, die nicht empfangen können während sie Senden. In dem Fall der Fig. 6c gibt es m=2 Sender aus dem Sendediagramm 301a, 301b und n=8 reine Empfänger. Hinzu kommen 2 Empfangssignale durch die Sendeempfänger . Ist zum Zeitpunkt t1 der erste Sender 207a aktiv, kann zum Zeitpunkt t1 auch sein zugehöriger Empfänger 207a empfangen, ist zum Zeitpunkt t2 der zweite Sender 207b aktiv, kann zum Zeitpunkt t2 auch sein zugehöriger Empfänger 207b empfangen. Zum Zeitpunkt t1 ist der zweite Sender 207b und somit auch der zweite Empfänger 207b deaktiviert und geht nicht in die Berechnung ein. Zum Zeitpunkt t2 ist der erste Sender 207a und somit auch der erste Empfänger deaktiviert und geht nicht in die Berechnung ein. Dementsprechend weist das Co-Array 513c 2 x 8 + 2 = 18 Elemente auf.

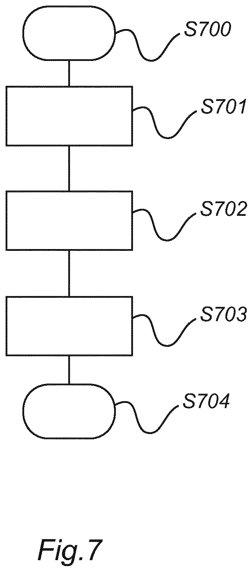

Fig. 7 zeigt ein Flussdiagramm für ein Verfahren zum Senden und/oder Empfangen eines Signals gemäß einem exemplarischen Ausführungsbeispiel der vorliegenden Erfindung. Das Verfahren startet in einem Startzustand S700. In einem Schritt S701 wird ein Sendesignal mit einer vorgebbaren Grundfrequenz in einer Signalquelle erzeugt. Im Schritt S702 wird das Sendesignal an einen ersten Sendekanal 202a zugeführt, der eine erste Frequenzumsetzeinrichtung 501a und eine erste Sendeeinrichtung 504a"" aufweist. Die Sendeeinrichtung 504a"" oder Antenne 504a"" weist einen ersten Frequenzdurchlassbereich auf. In dem Schritt S703 erfolgt ein zeitgesteuertes Umsetzen der Grundfrequenz des Sendesignals auf eine erste Sendefrequenz. Die erste Sendefrequenz liegt in einem ersten Frequenzdurchlassbereich der ersten Sendeeinrichtung 202a. Die Umsetzung der Grundfrequenz auf die erste Sendefrequenz erfolgt um über den ersten Sendekanal 202a ein erstes Sendesignal mit der ersten Sendefrequenz bereitzustellen. In einem Beispiel mag die Grundfrequenz 13 GHz betragen und die erste Sendefrequenz 79 GHz.

Das Umsetzen der Grundfrequenz des Sendesignals auf die erste Sendefrequenz, die in dem ersten Frequenzdurchlassbereich liegt, erfolgt nach einem vorgebbaren Zeitschema. Dieses Zeitschema wird durch Ansteuern einer Schalteinrichtung 507' umgesetzt, sodass ein periodisches Signal entsprechend dem ersten Zeitschema über den ersten Sendekanal 202a bereitgestellt wird. Das Verfahren endet in dem Endzustand 704.

## Patentansprüche

1. Antennenvorrichtung (201'''', 201''''') für ein Multiple Input - Multiple Output Füllstandradargerät, das nach dem Frequency Modulated Continuous Wave Prinzip und einem Zeitmultiplexverfahren arbeitet, aufweisend:
eine Signalquelle (502) mit einer Phasenregelschleife zum Erzeugen eines Sendesignals mit einer Grundfrequenz;
eine Steuereinrichtung (111) mit einer Schalteinrichtung (507, 507', 604, 605a, 605b, 702);
mehrere Sendekanäle, wobei ein erster Sendekanal (202a, 207a) aufweist:
eine erste Frequenzumsetzeinrichtung (501a, 501b); und
eine erste Sendeeinrichtung (504a'''', 504b'''', 504a''''', 504b''''') mit einem ersten Frequenzdurchlassbereich;
mehrere Empfangskanäle (205, 205a, 205b);
wobei jeder Empfangskanal eine Empfangs-Frequenzumsetzeinrichtung (501a', 501b') aufweist, und wobei jeder Sendekanal eine Frequenzumsetzeinrichtung aufweist;
wobei die Signalquelle (502) mit der Frequenzumsetzeinrichtung jedes Sendekanals und der Empfangs-Frequenzumsetzeinrichtung (501a', 501b') jedes Empfangskanals verbunden ist;
wobei die Schalteinrichtung (507, 507', 604, 605a, 605b, 702) mit der ersten Frequenzumsetzeinrichtung (501a, 501b,) verbunden ist, zum zeitgesteuerten An- und Abschalten der Frequenzumsetzeinrichtung und zum zeitgesteuerten Umsetzen der Grundfrequenz des Sendesignals auf eine erste Sendefrequenz, die in einem ersten Frequenzdurchlassbereich der ersten Sendeeinrichtung (504a'''', 504b'''', 504a''''', 504b''''') liegt, um über den ersten Sendekanal (202a, 202b, 207a, 207b) ein erstes Sendesignal mit der ersten Sendefrequenz bereitzustellen; und
wobei das Umsetzen der Grundfrequenz des Sendesignals auf die erste Sendefrequenz, die in dem ersten Frequenz-Durchlassbereich liegt, nach einem vorgebbaren ersten Zeitschema (t1, t2) gemäß einem Zeitmultiplexverfahren erfolgt;
wobei die Antennenvorrichtung (201'''', 201''''') eingerichtet ist, durch die Auswertung der Signale der einzelnen Empfangskanäle (205, 205a, 205b), die Signale immer dann empfangen, wenn mindestens ein Sendekanal angeschaltet ist, ein Oberflächenprofil eines Schüttguts zu errechnen.

2. Die Antennenvorrichtung (201''', 201''''') nach Anspruch 1, weiter aufweisend:
zumindest einen zweiten Sendekanal (202a, 202b, 207a, 207b), aufweisend:
eine zweite Frequenzumsetzeinrichtung (501a, 501b); und
eine zweite Sendeeinrichtung (504a'''', 504b'''', 504a''''', 504b''''') mit einem zweiten Frequenzdurchlassbereich;
wobei die Signalquelle (502) mit der zweiten Frequenzumsetzeinrichtung (501a, 501b) des jeweiligen zumindest einen zweiten Sendekanals (202a, 202b, 207a, 207b) verbunden ist;
wobei die Steuereinrichtung (111) mit der zweiten Frequenzumsetzeinrichtung (501a, 501b) des jeweiligen zumindest zweiten Sendekanals verbunden ist, zum zeitgesteuerten Umsetzen der Grundfrequenz des Sendesignals auf zumindest eine zweite Sendefrequenz, die in einem zweiten Frequenz-Durchlassbereich der zweiten Sendeeinrichtung des jeweiligen zumindest einen zweiten Sendekanals (202a, 202b, 207a, 207b), um über den zumindest einen zweiten Sendekanal (202a, 202b, 207a, 207b) ein zweites Sendesignal mit der zweiten Sendefrequenz bereitzustellen;
wobei das Umsetzen der Sendefrequenz auf den zweiten Frequenzdurchlassbereich nach zumindest einem vorgebbaren zweiten Zeitschema (t1, t2) erfolgt;
wobei die Steuereinrichtung (111) eingerichtet ist, das vorgebbare erste Zeitschema und das zumindest eine vorgebbare zweite Zeitschema zu einem vorgebbaren Gesamt-Zeitschema zu kombinieren;
wobei die Steuereinrichtung (101) eingerichtet ist, das vorgebbare Gesamt-Zeitschema bereitzustellen.

3. Die Antennenvorrichtung (201'''', 201''''') nach Anspruch 1 oder 2, wobei zumindest einer der Sendekanäle (202a, 207a) eine Sende-/Empfangs-Mischeinrichtung (901a, 901b) aufweist, wobei die Sende-/Empfangs-Mischeinrichtung (901a, 901b) mit der Frequenzumsetzeinrichtung (501a, 501b) des Sendekanals (202a, 207a) verbunden ist, um ein erstes Empfangssignal mit der ersten Sendefrequenz zu empfangen; und
wobei die Sende-/Empfangs-Mischeinrichtung (901a. 901b) eingerichtet ist, das erste Empfangssignal als ein erstes Sende-/Empfangs-Zwischenfrequenzsignal bereitzustellen.

4. Die Antennenvorrichtung (201'''', 201''''') nach einem der Ansprüche 1 bis 3,
wobei jeder Empfangskanal (205a, 205b) der mehreren Empfangskanälen weiter aufweist:
eine Empfangs-Mischeinrichtung (530a', 530b') mit einem Empfangs-Frequenz-Durchlassbereich;
wobei die Empfangs-Mischeinrichtung (530a', 530b') mit der Empfangs-Frequenzumsetzeinrichtung (501a', 501b') verbunden ist, zum Umsetzen der Grundfrequenz des Sendesignals auf eine Empfangsfrequenz in einem Empfangs-Frequenz-Durchlassbereich der Empfangs-Mischeinrichtung (530a', 530b'), um über den zumindest einen Empfangskanal (205a, 205b) ein Empfangssignal mit der Empfangsfrequenz zu empfangen; und
wobei die Empfangs-Mischeinrichtung (530a', 530b') eingerichtet ist, das Empfangssignal über einen Ausgang (531a', 531b') der Empfangs-Mischeinrichtung (530a', 530b') als ein Empfangs-Zwischenfrequenzsignal bereitzustellen.

5. Die Antennenvorrichtung (201''', 201'''') nach einem der Ansprüche 2 bis 4, wobei zumindest eine von der ersten Frequenzumsetzeinrichtung (501a, 501b) und der jeweiligen zweiten Frequenzumsetzeinrichtung (501a, 501b) mit einer schaltbaren Energieversorgung (409) verbunden ist, um das zeitgesteuerte Umsetzen der Grundfrequenz des Sendesignals auf die erste Sendefrequenz bzw. das zeitgesteuerte Umsetzen der Grundfrequenz des Sendesignals auf die zweite Sendefrequenz zu ermöglichen.

6. Die Antennenvorrichtung (201'''', 201''''') nach einem der Ansprüche 2 bis 5, ferner aufweisend:
eine Auswerteeinrichtung (123);
wobei die Auswerteeinrichtung (123) eingerichtet ist, das vorgebbare Gesamt-Zeitschema und/oder zumindest zwei Zwischenfrequenz-Empfangssignale ausgewählt aus der Gruppe der Zwischenfrequenz-Empfangssignale bestehend aus:
dem ersten Sende-/Empfangs-Zwischenfrequenzsignal;
dem zumindest einen zweiten Sende-/Empfangs-Zwischenfrequenzsignal;
und
dem Empfangs-Zwischenfrequenzsignal;
zu empfangen;
wobei die Auswerteeinrichtung (123) eingerichtet ist, durch das Anwenden von einer Methode zur digitalen Strahlformung aus dem vorgebbaren Gesamt-Zeitschema und den zumindest zwei Zwischenfrequenz-Empfangssignalen eine Empfangsechokurve für eine Raumrichtung zu bestimmen.

7. Die Antennenvorrichtung (201'''', 201''''') nach Anspruch 6, wobei die Methode zur digitalen Strahlformung das Bilden eines virtuellen Co-Arrays (413b, 413c) aufweist;
wobei das virtuelle Co-Array (413b, 413c) eine Ausdehnung aufweist, welche größer als die physikalische Ausdehnung der Antennenvorrichtung (201"", 201"'") in zumindest eine Raumrichtung (101, 102, 103) ist.

8. Die Antennenvorrichtung (201'''', 201''''') nach einem der Ansprüche 4 bis 7, aufweisend zumindest zwei Sendekanäle (202a, 202b, 207a, 207b) und mehrere Empfangskanäle (205a, 205b, 207a, 207b), wobei die Kanäle linienförmig und/oder rasterförmig mit einem gleichmäßigen Abstand untereinander angeordnet sind, um eine Antennengruppe zu formen.

9. Die Antennenvorrichtung (201'''', 201''''') nach Anspruch 8, wobei die erste Sendefrequenz, die zweite Sendefrequenz und/oder die Empfangsfrequenz gleich sind; und
wobei der gleichmäßige Abstand die halbe Wellenlänge der ersten Sendefrequenz, die halbe Wellenlänge der zweiten Sendefrequenz und/oder die halbe Wellenlänge der Empfangsfrequenz beträgt;
wobei sich die Wellenlänge aus der Ausbreitungsgeschwindigkeit einer Welle, die von einem Signal mit der jeweiligen Frequenz hervorgerufen wird, geteilt durch die jeweilige Frequenz ergibt.

10. Die Antennenvorrichtung (201'''', 201''''') nach einem der Ansprüche 2 bis 9, wobei zwischen der Signalquelle (502) und zumindest einer der ersten Frequenzumsetzeinrichtung (501a, 501b), der zweiten Frequenzumsetzeinrichtung (501a, 501b); und/oder der Empfangs-Frequenzumsetzeinrichtung (501a', 501b') ein Isolator (560a, 560b) angeordnet ist;
wobei der Isolator (560a, 560b) eingerichtet ist, in einer Umsetzungspause des zeitgesteuerten Umsetzens der Grundfrequenz des Sendesignals auf die erste Sendefrequenz und/oder in einer Umsetzungspause des zeitgesteuertem Umsetzens der Grundfrequenz des Sendesignals auf die zumindest eine zweite Sendefrequenz und/oder in einer Umsetzungspause des Umsetzens der Grundfrequenz des Sendesignals auf die Empfangsfrequenz eine Signalreflexion zu unterdrücken, um zu verhindern, dass das erste Empfangssignal, das zweite Empfangssignal und/oder das Empfangssignal zu der Signalquelle und/oder den jeweils anderen Sendern und/oder Empfängern gelangt.

11. Die Antennenvorrichtung (201'''', 201''''') nach einem der Ansprüche 2 bis 10, weiter aufweisend:
eine Verarbeitungseinrichtung;
wobei die Verarbeitungseinrichtung eingerichtet ist, aus zumindest einem dem Gesamt-Zeitschema, dem Empfangs-Zwischenfrequenzsignal, dem Sende-/Empfangszwischenfrequenzsignal und/oder der Raumorientierung einen Füllstand, ein Volumen eines Objektes, eine Masse eines Objektes und/oder eine Oberflächenstruktur eines Objekts zu ermitteln.

12. Die Antennenvorrichtung (201'''', 201''''') nach einem der Ansprüche 1 bis 11, wobei die Antennenvorrichtung als Zweileitergerät ausgebildet ist, wobei eine Energieversorgungsleitung auch zur Datenübertragung genutzt wird.

13. Füllstandmessgerät (105) zum Bestimmen eines Füllstandes und/oder zum Bestimmen einer Oberflächenstruktur (120) eines Objektes (104) mit einer Antennenvorrichtung (201'''', 201''''') nach einem der Ansprüche 1 bis 12.

14. Verfahren zum Senden und/oder Empfangen eines Signals durch ein Multiple Input - Multiple Output Füllstandradargerät, das nach dem Frequency Modulated Continuous Wave Prinzip und einem Zeitmultiplexverfahren arbeitet, das Verfahren aufweisend:
Erzeugen eines Sendesignals mit einer Grundfrequenz in einer Signalquelle mit einer Phasenregelschleife;
Zuführen des Sendesignals an mehrere Sendekanäle und insbesondere einen ersten Sendekanal, aufweisend eine erste Frequenzumsetzeinrichtung und eine erste Sendeeinrichtung mit einem ersten Frequenz-Durchlassbereich;
An- und Abschalten der ersten Frequenzumsetzeinrichtung und zeitgesteuertes Umsetzen der Grundfrequenz des Sendesignals auf eine erste Sendefrequenz, die in einem ersten Frequenz-Durchlassbereich der ersten Sendeeinrichtung liegt, um über den ersten Sendekanal ein erstes Sendesignal mit der ersten Sendefrequenz bereitzustellen;
Empfangen der Signale durch mehrere Empfangskanäle, jeder Empfangskanal davon aufweisend eine Empfangs-Frequenzumsetzeinrichtung;
Auswerten der empfangenen Signale und Errechnen eines Oberflächenprofils eines Schüttguts;
wobei das Umsetzen der Grundfrequenz des Sendesignals auf die erste Sendefrequenz in dem ersten Frequenz-Durchlassbereich nach einem vorgebbaren ersten Zeitschema gemäß einem Zeitmultiplexverfahren erfolgt;
wobei ein Oberflächenprofil eines Schüttguts durch die Auswertung der Signale der einzelnen Empfangskanäle (205, 205a, 205b), die Signale immer dann empfangen, wenn mindestens ein Sendekanal angeschaltet ist, errechnet wird.

15. Programmelement zum Senden und/oder Empfangen eines Signals, das, wenn es von einem Prozessor eines Multiple Input - Multiple Output Füllstandradargeräts, das nach dem Frequency Modulated Continuous Wave Prinzip und einem Zeitmultiplexverfahren arbeitet, ausgeführt wird, folgende Verfahrensschritte ausführt:
Erzeugen eines Sendesignals mit einer Grundfrequenz in einer Signalquelle mit einer Phasenregelschleife;
Zuführen des Sendesignals an mehrere Sendekanäle und insbesondere einen ersten Sendekanal, aufweisend eine erste Frequenzumsetzeinrichtung und eine erste Sendeeinrichtung mit einem ersten Frequenz-Durchlassbereich;
An- und Abschalten der ersten Frequenzumsetzeinrichtung und zeitgesteuertes Umsetzen der Grundfrequenz des Sendesignals auf eine erste Sendefrequenz, die in einem ersten Frequenz-Durchlassbereich der ersten Sendeeinrichtung liegt, um über den ersten Sendekanal ein erstes Sendesignal mit der ersten Sendefrequenz bereitzustellen;
Empfangen der Signale durch mehrere Empfangskanäle, jeder Empfangskanal davon aufweisend eine Empfangs-Frequenzumsetzeinrichtung;
Auswerten der empfangenen Signale und Errechnen eines Oberflächenprofils eines Schüttguts;
wobei das Umsetzen der Grundfrequenz des Sendesignals auf die erste Sendefrequenz in dem ersten Frequenz-Durchlassbereich nach einem vorgebbaren ersten Zeitschema gemäß einem Zeitmultiplexverfahren erfolgt;
wobei ein Oberflächenprofil eines Schüttguts durch die Auswertung der Signale der einzelnen Empfangskanäle (205, 205a, 205b), die Signale immer dann empfangen, wenn mindestens ein Sendekanal angeschaltet ist, errechnet wird.

## Claims

1. Antenna device (201'''', 201''''') for a multiple-input multiple-output fill level radar device, which operates according to the frequency-modulated continuous-wave principle and a time division multiplexing method, comprising:
a signal source (502) with a phase-locked loop configured to generate a transmit signal with a basic frequency;
a control device (111) with a switching device (507, 507', 604, 605a, 605b, 702);
a plurality of transmit channels, wherein a first transmit channel (202a, 207a), comprises:
a first frequency conversion device (501a, 501b); and
a first transmit device (504a'''', 504b'''', 504a''''', 504b''''') with a first frequency pass band;
a plurality of receive channels (205, 205a, 205b);
wherein each receive channel comprises a receive frequency conversion device ((501a', 501b'), and wherein each transmit channel comprises a frequency conversion device;
wherein the signal source (502) is connected to the frequency conversion device of each transmit channel and the receive frequency conversion device ((501a', 501b') of each receive channel;
wherein the switching device (507, 507', 604, 605a, 605b, 702) is connected to the first frequency conversion device (501a, 501b), for the time-controlled switching on and off of the frequency conversion device and the time-controlled conversion of the basic frequency of the transmit signal to a first transmit frequency, which lies in the first frequency pass band of the first transmit device (504a'''', 504b'''', 504a''''', 504b'''''), in order to provide via the first transmit channel (202a, 202b, 207a, 207b) a first transmit signal with the first transmit frequency; and
CGS:ag
wherein the conversion of the basic frequency of the transmit signal to the first transmit frequency, which lies in the first frequency pass band, is carried out according to a specifiable first time schedule (t1, t2) according to a time-division multiplexing method;
wherein the antenna device (201'''', 201''''') is configured to, by evaluating the signals of the individual receive channels (205, 205a, 205b) that always receive signals when at least one transmit channel is switched on to calculate a surface profile of a bulk material.

2. The antenna device (201'''', 201''''') according to claim 1, further comprising:
at least one second transmit channel (202a, 202b, 207a, 207b), comprising:
a second frequency conversion device (501a, 501b); and
a second transmit device (504a'''', 504b'''', 504a''''', 504b''''') with a second frequency pass band;
wherein the signal source (502) is connected to the second frequency conversion device (501a, 501b) of the respective at least one second transmit channel (202a, 202b, 207a, 207b);
wherein the control device (111) is connected to the second frequency conversion device (501a, 501b) of the respective at least second transmit channel, for the time-controlled conversion of the basic frequency of the transmit signal to at least a second transmit frequency, which lies in a second frequency pass band of the second transmit device of the respective at least one second transmit channel (202a, 202b, 207a, 207b), in order to provide a second transmit signal with the second transmit frequency via the at least one second transmit channel (202a, 202b, 207a, 207b);
wherein the conversion of the transmit frequency to the second frequency pass band takes place according to at least one specifiable second time schedule (t1, t2);
wherein the control device (111) is configured to combine the specifiable first time schedule and the at least one specifiable second time schedule to a specifiable overall time schedule;
wherein the control device (101) is configured to provide the specifiable overall time schedule.

3. The antenna device (201'''', 201''''') according to claim 1 or claim 2, wherein at least one of the transmit channel (202a, 207a) comprises a transmit/receive mixing device (901a. 901b), wherein the transmit/receive mixing device (901a, 901b) is connected to the frequency conversion device (501a, 501b) of the transmit channel (202a, 207a), in order to receive a first receive signal with the first transmit frequency; and
wherein the transmit/receive mixing device (901a. 901b) is configured to provide the first receive signal as a first transmit/receive intermediate frequency signal.

4. The antenna device (201'''', 201''''') according to any of claims 1 to 3, wherein each receive channel (205a, 205b) of the plurality of receive channels further comprises:
a receive mixing device (530a', 530b') with a receive frequency pass band.
wherein the receive mixing device (530a', 530b') is connected to the receive frequency conversion device (501a', 501b'), to convert the basic frequency of the transmit signal to a receive frequency in a receive frequency pass band of the receive mixing device (530a', 530b'), in order to receive via the at least one receive channel (205a, 205b) a receive signal with the receive frequency; and
wherein the receive mixing device (530a', 530b') is configured to provide the receive signal via an output (531a', 531b') of the receive mixing device (530a', 530b') as a receive intermediate frequency signal.

5. The antenna device (201'''', 201''''') according to any of claims 2 to 4, wherein at least one of the first frequency conversion devices (501a, 501b) and the respective second frequency conversion device (501a, 501b) is connected to a switchable energy supply (409) in order to facilitate the time-controlled conversion of the basic frequency of the transmit signal to the first transmit frequency or the time-controlled conversion of the basic frequency of the transmit signal to the second transmit frequency.

6. The antenna device (201'''', 201''''') according to any of claims 2 to 5, further comprising:
an evaluation device (123);
wherein the evaluation device (123) is configured to receive the specifiable overall time schedule and/or at least two intermediate frequency receive signals chosen from the group of intermediate frequency receive signals consisting of:
the first transmit/receive intermediate frequency signal;
the at least one second transmit/receive intermediate frequency signal; and
the receive intermediate frequency signal;
to receive;
wherein the evaluation device (123) is configured to determine a receive echo curve for a spatial direction by the application of a method for digital beamforming from the specifiable overall time schedule and the at least two intermediate frequency receive signals.

7. The antenna device (201'''', 201''''') according to claim 6, wherein the method for digital beamforming comprises the formation of a virtual co-array (413b, 413c);
wherein the virtual co-array (413b, 413c) has an extension that is greater than the physical extension of the antenna device (201'''', 201''''') in at least one spatial direction (101, 102, 103).

8. The antenna device (201'''', 201''''') according to any of claims 4 to 7, comprising at least two transmit channels (202a, 202b, 207a, 207b) and a plurality of receive channels (205a, 205b, 207a, 207b), wherein the channels are arranged in a linear and/or grid form with a uniform spacing from one another, in order to form an antenna group.

9. The antenna device (201'''', 201''''') according to claim 8, wherein the first transmit frequency, the second transmit frequency and/or the receive frequency are identical; and
wherein the uniform spacing is half the wavelength of the first transmit frequency, half the wavelength of the second transmit frequency and/or half the wavelength of the receive frequency;
wherein the wavelength results from the propagation speed of a wave, which is produced by a signal with the respective frequency, divided by the respective frequency.

10. The antenna device (201'''', 201''''') according to any of claims 2 to 9, wherein an isolator (560a, 560b) is arranged between the signal source (502) and at least one of the first frequency conversion device (501a, 501b), the second frequency conversion device (501a, 501b) and/or the receive frequency conversion device (501a', 501b');
wherein the isolator (560a, 560b) is configured to suppress a signal reflection in a conversion break of the time-controlled conversion of the basic frequency of the transmit signal to the first transmit frequency and/or in a conversion break of the time-controlled conversion of the basic frequency of the transmit signal to the at least one second transmit frequency and/or in a conversion break of the conversion of the basic frequency of the transmit signal to the receive frequency, in order to prevent the first receive signal, the second receive signal and/or the receive signal from reaching the signal source and/or the other transmitters and/or receivers respectively.

11. The antenna device (201'''', 201''''') according to any of claims 2 to 10, further comprising:
a processing device;
wherein the processing device is configured to determine a fill level, a volume of an object, a mass of an object and/or a surface structure of an object from at least one of the overall time schedule, the receive intermediate frequency signal, the transmit/receive intermediate frequency signal and/or the spatial orientation.

12. The antenna device (201'''', 201''''') according to any of claims 1 to 11, wherein the antenna device is formed as a two-conductor device, wherein an energy supply line is also used for data transmission.

13. Fill level measuring device (105) for determining a fill level and/or for determining a surface structure (120) of an object (104) with an antenna device (201'''', 201''''') according to any of claims 1 to 12.

14. Method for transmitting and/or receiving a signal by a multiple-input multiple-output fill level radar device, which operates according to the frequency-modulated continuous-wave principle and a time-division multiplexing method, the method comprising:
generating a transmit signal with a basic frequency in a signal source with a phase-locked loop;
supplying the transmit signal to a plurality of transmit channels and, in particular, a first transmit channel, comprising a first frequency conversion device and a first transmit device with a first frequency pass band;
switching on and off of the first frequency conversion device and converting in a time-controlled manner the basic frequency of the transmit signal to a first transmit frequency, which lies in a first frequency pass band of the first transmit device, in order to provide via the first transmit channel a first transmit signal with the first transmit frequency;
receiving the signals by the plurality of receive channels, wherein each receive channel thereof comprises a receive frequency conversion device;
evaluating the received signals and calculating a surface profile of a bulk material;
wherein the conversion of the basic frequency of the transmit signal to the first transmit frequency in the first frequency passband takes place according to a specifiable first time schedule;
wherein a surface profile of a bulk material is calculated by evaluating the signals of the individual receive channels (205, 205a, 205b) that always receive signals when at least one transmit channel is switched on.

15. Program element for transmitting and/or receiving a signal, which, when executed by a processor of a multiple-input multiple-output fill level radar device, which operates according to the frequency-modulated continuous-wave principle and a time-division multiplexing method, executes the following method steps:
generating a transmit signal with a basic frequency in a signal source with a phase-locked loop;
supplying the transmit signal to a plurality of transmit channels and, in particular, a first transmit channel, comprising a first frequency conversion device and a first transmit device with a first frequency pass band;
switching on and off of the first frequency conversion device and converting in a time-controlled manner the basic frequency of the transmit signal to a first transmit frequency, which lies in a first frequency pass band of the first transmit device, in order to provide via the first transmit channel a first transmit signal with the first transmit frequency;
receiving the signals by the plurality of receive channels, wherein each receive channel thereof comprises a receive frequency conversion device;
evaluating the received signals and calculating a surface profile of a bulk material;
wherein the conversion of the basic frequency of the transmit signal to the first transmit frequency in the first frequency passband takes place according to a specifiable first time schedule;
wherein a surface profile of a bulk material is calculated by evaluating the signals of the individual receive channels (205, 205a, 205b) that always receive signals when at least one transmit channel is switched on.

## Revendications

1. Dispositif d'antenne (201'''', 201''''') pour un radar de niveau de remplissage à entrées multiples et sorties multiples fonctionnant selon le principe des ondes entretenues modulées en fréquence et selon un procédé de multiplexage par répartition dans le temps, présentant :
une source de signaux (502) comprenant une boucle à verrouillage de phase pour générer un signal d'émission à une fréquence fondamentale ;
un moyen de commande (111) avec un moyen de commutation (507, 507', 604, 605a, 605b, 702) ;
plusieurs canaux d'émission, un premier canal d'émission (202a, 207a) présentant :
un premier moyen de conversion de fréquence (501a, 501b) ;
et
un premier moyen d'émission (504a'''', 504b'''', 504a''''', 504b''''') ayant une première bande passante de fréquences ; plusieurs canaux de réception (205, 205a, 205b) ;
dans lequel chaque canal de réception présente un moyen de conversion de fréquence de réception (501a', 501b') et chaque canal d'émission présente un moyen de conversion de fréquence ;
dans lequel la source de signaux (502) est reliée au moyen de conversion de fréquence de chaque canal d'émission et au moyen de conversion de fréquence de réception (501a', 501b') de chaque canal de réception ;
dans lequel le moyen de commutation (507, 507', 604, 605a, 605b, 702) est relié au premier moyen de conversion de fréquence (501a, 501b) pour l'activation et la désactivation temporisées du moyen de conversion de fréquence et pour la conversion temporisée de la fréquence fondamentale du signal d'émission en une première fréquence d'émission qui se situe dans une première bande passante de fréquences du premier moyen d'émission (504a'''', 504b'''', 504a''''', 504b''''') pour mettre à disposition un premier signal d'émission à la première fréquence d'émission par le premier canal d'émission (202a, 202b, 207a, 207b) ; et
dans lequel la conversion de la fréquence fondamentale du signal d'émission en la première fréquence d'émission qui se situe dans la première bande passante de fréquences a lieu suivant un premier schéma temporel prédéfinissable (t1, t2) selon un procédé de multiplexage par répartition dans le temps ;
dans lequel le dispositif d'antenne (201'''', 201''''') est conçu pour calculer un profil de surface d'un produit en vrac en évaluant les signaux des différents canaux de réception (205, 205a, 205b) qui reçoivent des signaux chaque fois qu'au moins un canal d'émission est activé.

2. Dispositif d'antenne (201'''', 201''''') selon la revendication 1, présentant en outre :
au moins un deuxième canal d'émission (202a, 202b, 207a, 207b), présentant :
un deuxième moyen de conversion de fréquence (501a, 501b) ;
et
un deuxième moyen d'émission (504a'''', 504b'''', 504a''''', 504b'''') ayant une deuxième bande passante de fréquences ;
dans lequel la source de signaux (502) est reliée au deuxième moyen de conversion de fréquence (501a, 501b) dudit au moins un deuxième canal d'émission respectif (202a, 202b, 207a, 207b) ;
dans lequel le moyen de commande (111) est relié au deuxième moyen de conversion de fréquence (501a, 501b) dudit au moins un deuxième canal d'émission respectif pour la conversion temporisée de la fréquence fondamentale du signal d'émission en au moins une deuxième fréquence d'émission qui se situe dans une deuxième bande passante de fréquences du deuxième moyen d'émission dudit au moins un deuxième canal d'émission respectif (202a, 202b, 207a, 207b) pour mettre à disposition un deuxième signal d'émission à la deuxième fréquence d'émission par ledit au moins un deuxième canal d'émission (202a, 202b, 207a, 207b) ;
dans lequel la conversion de la fréquence d'émission en la deuxième bande passante de fréquences a lieu suivant au moins un deuxième schéma temporel prédéfinissable (t1, t2) ;
dans lequel le moyen de commande (111) est conçu pour combiner le premier schéma temporel prédéfinissable et ledit au moins un deuxième schéma temporel prédéfinissable en un schéma temporel global prédéfinissable ;
dans lequel le moyen de commande (101) est conçu pour mettre à disposition le schéma temporel global prédéfinissable.

3. Dispositif d'antenne (201'''', 201''''') selon la revendication 1 ou 2, dans lequel au moins un des canaux d'émission (202a, 207a) présente un moyen de mélange d'émission/réception (901a, 901b), dans lequel le moyen de mélange d'émission/réception (901a, 901b) est relié au moyen de conversion de fréquence (501a, 501b) du canal d'émission (202a, 207a) pour recevoir un premier signal de réception à la première fréquence d'émission ; et
dans lequel le moyen de mélange d'émission/réception (901a, 901b) est conçu pour mettre à disposition le premier signal de réception sous la forme d'un premier signal à fréquence intermédiaire d'émission/réception.

4. Dispositif d'antenne (201"", 201""') selon l'une des revendications 1 à 3,
dans lequel chaque canal de réception (205a, 205b) desdits plusieurs canaux de réception présente en outre :
un moyen de mélange de réception (530a', 530b') ayant une bande passante de fréquences de réception ;
dans lequel le moyen de mélange de réception (530a', 530b') est relié au moyen de conversion de fréquence de réception (501a', 501b') pour convertir la fréquence fondamentale du signal d'émission en une fréquence de réception dans une bande passante de fréquences de réception du moyen de mélange de réception (530a', 530b') pour recevoir un signal de réception à la fréquence de réception par ledit au moins un canal de réception (205a, 205b) ; et
dans lequel le moyen de mélange de réception (530a', 530b') est conçu pour mettre à disposition par une sortie (531a', 531b') le signal de réception du moyen de mélange de réception (530a', 530b') sous la forme d'un signal à fréquence intermédiaire de réception.

5. Dispositif d'antenne (201'''', 201''''') selon l'une des revendications 2 à 4, dans lequel au moins l'un du premier moyen de conversion de fréquence (501a, 501b) et du deuxième moyen de conversion de fréquence respectif (501a, 501b) est relié à une alimentation en énergie commutable (409) pour permettre la conversion temporisée de la fréquence fondamentale du signal d'émission en la première fréquence d'émission, respectivement la conversion temporisée de la fréquence fondamentale du signal d'émission en la deuxième fréquence d'émission.

6. Dispositif d'antenne (201'''', 201''''') selon l'une des revendications 2 à 5, présentant en outre :
un moyen d'évaluation (123) ;
dans lequel le moyen d'évaluation (123) est conçu pour recevoir le schéma temporel global prédéfinissable et/ou au moins deux signaux de réception à fréquence intermédiaire choisis dans le groupe de signaux de réception à fréquence intermédiaire constitué par :
le premier signal à fréquence intermédiaire d'émission/réception ;
ledit au moins un deuxième signal à fréquence intermédiaire d'émission/réception; et
le signal à fréquence intermédiaire de réception ;
dans lequel le moyen d'évaluation (123) est conçu pour déterminer une courbe d'écho de réception pour une direction spatiale en appliquant une méthode de formation de faisceau numérique à partir du schéma temporel global prédéfinissable et desdits au moins deux signaux de réception à fréquence intermédiaire.

7. Dispositif d'antenne (201'''', 201''''') selon la revendication 6, dans lequel la méthode de formation de faisceau numérique comprend la formation d'un co-réseau virtuel (413b, 413c) ;
dans lequel le co-réseau virtuel (413b, 413c) présente une extension qui est plus grande que l'extension physique du dispositif d'antenne (201'''', 201''''') dans au moins une direction spatiale (101, 102, 103).

8. Dispositif d'antenne (201'''', 201''''') selon l'une des revendications 4 à 7, présentant au moins deux canaux d'émission (202a, 202b, 207a, 207b) et plusieurs canaux de réception (205a, 205b, 207a, 207b), les canaux étant disposés en ligne et/ou en grille à une distance uniforme les uns des autres pour former un groupe d'antennes.

9. Dispositif d'antenne (201'''', 201''''') selon la revendication 8, dans lequel la première fréquence d'émission, la deuxième fréquence d'émission et/ou la fréquence de réception sont les mêmes ; et
dans lequel la distance uniforme est la moitié de la longueur d'onde de la première fréquence d'émission, la moitié de la longueur d'onde de la deuxième fréquence d'émission et/ou la moitié de la longueur d'onde de la fréquence de réception ;
dans lequel la longueur d'onde est obtenue en divisant la vitesse de propagation d'une onde produite par un signal à la fréquence respective par la fréquence respective.

10. Dispositif d'antenne (201'''', 201''''') selon l'une des revendications 2 à 9, dans lequel un isolateur (560a, 560b) est disposé entre la source de signaux (502) et au moins l'un du premier moyen de conversion de fréquence (501a, 501b), du deuxième moyen de conversion de fréquence (501a, 501b) et/ou du moyen de conversion de fréquence de réception (501a', 501b') ;
dans lequel l'isolateur (560a, 560b) est conçu pour supprimer la réflexion de signal dans une pause de conversion de la conversion temporisée de la fréquence fondamentale du signal d'émission en la première fréquence d'émission et/ou dans une pause de conversion de la conversion temporisée de la fréquence fondamentale du signal d'émission en ladite au moins une deuxième fréquence d'émission et/ou dans une pause de conversion de la conversion de la fréquence fondamentale du signal d'émission en la fréquence de réception, pour empêcher le premier signal de réception, le deuxième signal de réception et/ou le signal de réception d'atteindre la source de signaux et/ou les autres émetteurs et/ou récepteurs respectifs.

11. Dispositif d'antenne (201'''', 201''''') selon l'une des revendications 2 à 10, présentant en outre :
un moyen de traitement ;
dans lequel le moyen de traitement est conçu pour déterminer un niveau de remplissage, un volume d'un objet, une masse d'un objet et/ou une structure de surface d'un objet à partir d'au moins l'un des éléments suivants : le schéma temporel global, le signal à fréquence intermédiaire de réception, le signal à fréquence intermédiaire d'émission/réception et/ou l'orientation spatiale.

12. Dispositif d'antenne (201'''', 201''''') selon l'une des revendications 1 à 11, dans lequel le dispositif d'antenne est conçu comme un appareil à deux fils, dans lequel une ligne d'alimentation en énergie est également utilisée pour la transmission de données.

13. Appareil de mesure de niveau de remplissage (105) pour déterminer un niveau de remplissage et/ou pour déterminer une structure de surface (120) d'un objet (104) avec un dispositif d'antenne (201'''', 201''''') selon l'une des revendications 1 à 12.

14. Procédé d'émission et/ou de réception d'un signal par un radar de niveau de remplissage à entrées multiples et sorties multiples fonctionnant selon le principe des ondes entretenues modulées en fréquence et selon un procédé de multiplexage par répartition dans le temps, le procédé présentant les étapes suivantes :
génération d'un signal d'émission à une fréquence fondamentale dans une source de signaux comprenant une boucle à verrouillage de phase ;
amenée du signal d'émission à plusieurs canaux d'émission et en particulier à un premier canal d'émission présentant un premier moyen de conversion de fréquence et un premier moyen d'émission ayant une première bande passante de fréquences ;
activation et désactivation du premier moyen de conversion de fréquence et conversion temporisée de la fréquence fondamentale du signal d'émission en une première fréquence d'émission qui se situe dans une première bande passante de fréquences du premier moyen d'émission pour mettre à disposition un premier signal d'émission à la première fréquence d'émission par le premier canal d'émission ;
réception des signaux par plusieurs canaux de réception, chaque canal de réception de ceux-ci présentant un moyen de conversion de fréquence de réception ;
évaluation des signaux reçus et calcul d'un profil de surface d'un produit en vrac ;
dans lequel la conversion de la fréquence fondamentale du signal d'émission en la première fréquence d'émission dans la première bande passante de fréquences a lieu suivant un premier schéma temporel prédéfinissable selon un procédé de multiplexage par répartition dans le temps ;
dans lequel un profil de surface d'un produit en vrac est calculé en évaluant les signaux des différents canaux de réception (205, 205a, 205b) qui reçoivent des signaux chaque fois qu'au moins un canal d'émission est activé.

15. Élément de programme pour l'émission et/ou la réception d'un signal qui, lorsqu'il est exécuté par un processeur d'un radar de niveau de remplissage à entrées multiples et sorties multiples fonctionnant selon le principe des ondes entretenues modulées en fréquence et selon un procédé de multiplexage par répartition dans le temps, exécute les étapes de procédé suivantes :
génération d'un signal d'émission à une fréquence fondamentale dans une source de signaux comprenant une boucle à verrouillage de phase ;
amenée du signal d'émission à plusieurs canaux d'émission et en particulier à un premier canal d'émission présentant un premier moyen de conversion de fréquence et un premier moyen d'émission ayant une première bande passante de fréquences ;
activation et désactivation du premier moyen de conversion de fréquence et conversion temporisée de la fréquence fondamentale du signal d'émission en une première fréquence d'émission qui se situe dans une première bande passante de fréquences du premier moyen d'émission pour mettre à disposition un premier signal d'émission à la première fréquence d'émission par le premier canal d'émission ;
réception des signaux par plusieurs canaux de réception, chaque canal de réception de ceux-ci présentant un moyen de conversion de fréquence de réception ;
évaluation des signaux reçus et calcul d'un profil de surface d'un produit en vrac ;
dans lequel la conversion de la fréquence fondamentale du signal d'émission en la première fréquence d'émission dans la première bande passante de fréquences a lieu suivant un premier schéma temporel prédéfinissable selon un procédé de multiplexage par répartition dans le temps ;
dans lequel un profil de surface d'un produit en vrac est calculé en évaluant les signaux des différents canaux de réception (205, 205a, 205b) qui reçoivent des signaux chaque fois qu'au moins un canal d'émission est activé.
